# EUROPEAN PATENT APPLICATION

(11) **EP 2 575 047 A1**
(43) Date of publication of application: **03.04.2013**
(21) Application number: 12180243.3
(22) Date of filing: 13.08.2012
(51) Int. Cl.: G06F 11/36

(54) **Test support program, test support method, and test support apparatus**

(30) Priority: 28.09.2011 JP 2011213570
(71) Applicant: FUJITSU LIMITED, Kawasaki-shi, Kanagawa 211-8588 (JP)
(72) Inventor: Sakai, Kazuyuki, Kanagawa, 211-8588 (JP); Honma, Hideki, Kanagawa, 211-8588 (JP); Hanawa, Daiki, Kanagawa, 211-8588 (JP)
(74) Representative: HOFFMANN EITLE

(57) **Abstract**

A computer-readable recording medium has stored therein a program for causing a computer to execute a test supporting process. The computer supports testing of a series of tasks related to system administration of a system. The test supporting process includes acquiring, by the computer, input data concerning a given task that is among the series of tasks and operates a given device included in the system; retrieving, by the computer, execution history data concerning the given task, from a storage device that associates and stores therein execution history data including input data and output data of each task that has been executed in the system, and identification information of the tasks; and outputting, by the computer and from among the retrieved execution history data, the output data included in the execution history data that includes the acquired input data of the given task.

## Description

### FIELD

The embodiments discussed herein are related to a test support computer product, method, and apparatus.

### BACKGROUND

Recently, not only has the operation of operating systems (OS) and middleware become automated, but system administration work is also automated by defining, as an automated administrative process, confirmation/determination work that has been performed manually by an operator.

In testing a newly created automated administrative process, a mock of an operator component that operates an object (e.g., a server, an application) in the automated administrative process is used so as to not affect the object, which is in operation. A mock is a dummy operator component that returns output data without actually operating the object.

Related conventional technology includes, for example, technology that uses a simulator to perform operation training for a power plant that has multiple devices as objects subject to operation. For example, an operation support apparatus is equipped with a storage unit that stores the procedure by which operational devices were operated, an editing unit that edits the procedure stored in the storage unit, and a calculating unit that performs calculations for simulating the state of the plant according to the procedure that has been edited by the editing unit.

As a tool that creates test data used in program development, one technology analyzes a source program, extracts branch point and branch condition elements, and creates test data based on the extracted elements. Further, as a generation method of full-screen menu test data, one method creates from menu screen display data possessed by a host computer and instruction input data, test data that should be input to a terminal simulator.

For examples of such conventional technologies, refer to Japanese Laid-Open Patent Publication Nos. H11-312011, H3-241439, and S61-199132.

Nonetheless, these conventional technologies have a problem in that the work load for setting the output data of the mock operator component used in testing an automated administrative process is huge. For example, to manually input mock output data, troublesome tasks including examining operator component specifications and executing the operator component have to be performed. Furthermore, if the operator components and types of objects to be operated are numerous, the burden of creating output data patterns becomes great.

### SUMMARY

It is an object in one aspect of the embodiments to at least solve the above problems in the conventional technologies.

According to an aspect of an embodiment, a computer-readable recording medium has stored therein a program for causing a computer to execute a test supporting process. The computer supports testing of a series of tasks related to system administration of a system. The test supporting process includes acquiring, by the computer, input data concerning a given task that is among the series of tasks and operates a given device included in the system; retrieving, by the computer, execution history data concerning the given task, from a storage device that associates and stores therein execution history data including input data and output data of each task that has been executed in the system, and identification information of the tasks; and outputting, by the computer and from among the retrieved execution history data, the output data included in the execution history data that includes the acquired input data of the given task.

According to one aspect of the present invention, the work load for testing a series of tasks related to system administration can be reduced.

### BRIEF DESCRIPTION OF DRAWINGS

FIG. 1 is a diagram depicting one example of a test support method according to a first embodiment;
FIG. 2 is a diagram depicting an example of system configuration of an operations management system 200 according to a second embodiment;
FIG. 3 is a block diagram depicting an example of a hardware configuration of a computer;
FIG. 4 is a diagram depicting an example of contents of an execution history DB 110;
FIG. 5 is a diagram depicting an example of contents of a CMDB 120;
FIG. 6 is a diagram depicting a detailed example of an automated administrative process;
FIG. 7 is a diagram depicting an example of contents of a property table 700;
FIG. 8 is a block diagram of a functional configuration of a management server 201 according to the second embodiment;
FIG. 9 is a diagram depicting an example of configuration data associated with execution history data;
FIG. 10 is a diagram depicting a first example of the contents of the output data candidate list 1000;
FIG. 11 is diagram depicting a second example of the contents of the output data candidate list 1000;
FIG. 12 is diagram depicting a third example of the contents of the output data candidate list 1000;
FIG. 13 is diagram depicting a fourth example of the contents of the output data candidate list 1000;
FIG. 14 is diagram depicting a fifth example of the contents of the output data candidate list 1000;
FIG. 15 is a diagram depicting an example of output data consolidation;
FIG. 16 is a diagram depicting an example of contents of a branch route list 1600;
FIG. 17 is a diagram depicting an example of a selection screen;
FIG. 18 is diagram of another example of the selection screen;
FIG. 19 is a flowchart depicting an example of property identification processing by the management server 201 according to the second embodiment;
FIG. 20 is a diagram depicting an example of an input data format list 2000;
FIG. 21 is a flowchart depicting an example of property extrapolation processing;
FIG. 22 is a flowchart depicting an example of execution history collection processing of the management server 201 according to the second embodiment;
FIG. 23 is a flowchart depicting an example of test support processing of the management server 201 according to the second embodiment;
FIG. 24 is a flowchart depicting an example of a procedure of first processing for priority level setting;
FIG. 25 is a flowchart depicting an example of a procedure of second processing for priority level setting;
FIG. 26 is a flowchart depicting an example of a procedure of third processing for priority level setting;
FIG. 27 is a flowchart depicting an example a procedure of branch route judgment processing; and
FIG. 28 is a flowchart depicting an example of a procedure of output processing.

### DESCRIPTION OF EMBODIMENTS

Preferred embodiments of the present invention will be explained with reference to the accompanying drawings.

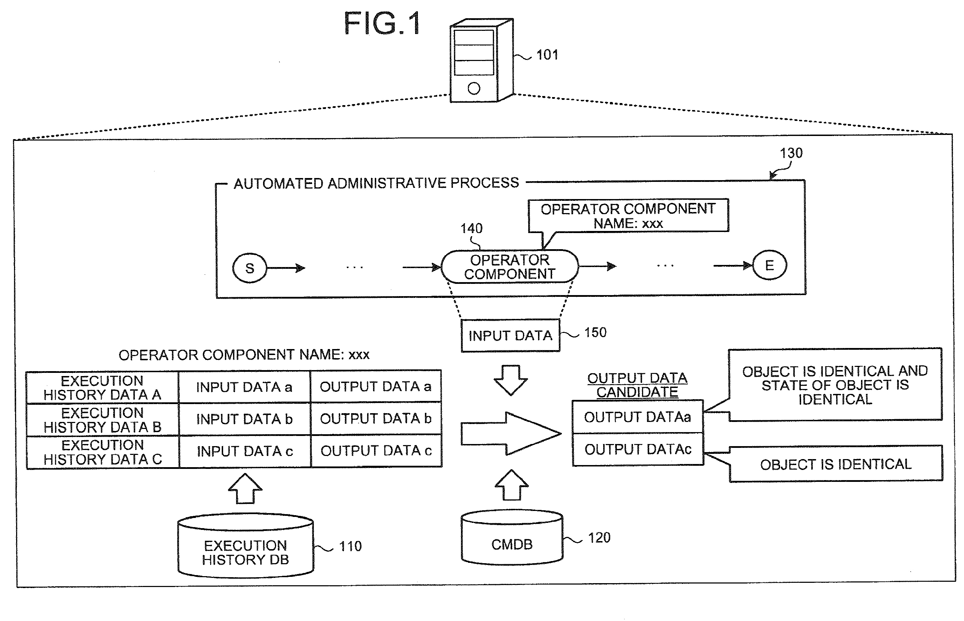

FIG. 1 is a diagram depicting one example of a test support method according to a first embodiment. In FIG. 1, a test support apparatus 101 is a computer that supports the testing of a series of tasks related to system administration. The test support apparatus 101 has access to an execution history database (DB) 110 and a configuration management database (CMDB) 120.

Herein, a system is an IT system (information processing system) that is subject to operation and maintenance, such as a business system at a corporate enterprise. A series of tasks related to system administration is that which automates system administrative procedures, such as a collection of, for example, worker tasks or system operations, defined as a series of work procedures.

In the description, an integration of a series of tasks related to system administration and a control screen for performing related input and confirmation work is referred to as an "automated administrative process". Further, a task that operates an object such as hardware and software in the system is referred to as an "operator component".

An operator component is, for example, script described so that a task for operating an object is automatically executed. For example, administrative knowhow of a business system, described in administrative procedures is process-defined as a flow, enabling administrative work to be expressed as a created automated administrative process.

When an automated administrative process is newly created, a test to confirm whether the automated administrative process properly functions is performed. In the test of the automated administrative process, mocks of operator components are used so to not affect the objects, which are in operation. A mock is a dummy operator component that returns output data without actually operating an object.

In the embodiment, work for setting the output data of a mock of an operator component included in an automated administrative process should be easy and as a hint for characteristics of input data to be provided to the mock, output data candidates are extrapolated from past output data that has been output from the operator component during actual operation.

(1) The test support apparatus 101 retrieves from the execution history DB 110, execution history data that corresponds to identification information of a component under test included in the automated administrative process under test. A component under test is an operator component that is among the operator components included in the automated administrative process and for which output data of the mock thereof is to be set.

Here, the execution history DB 110 associates and stores identification information of the operator component and execution history data that includes the input data and the output data of the operator component when the operator component was executed during actual operation of the automated administrative process.

The input data of the operator component is, for example, information indicating a value for each parameter input to the operator component. A parameter, for example, represents an object type such as host name, Internet Protocol (IP) address, file name, application name, process name (e.g., a process name on an OS), and work unit name.

The output data of the operator component is, for example, information indicating a value for each parameter output from the operator component. In other words, the output data of the operator component represents the output data output from the object operated by the operator component. The parameters are, for example, standard output (STDOUT), standard error output (STDERR), return values (RETCODE), etc.

The identification information of the operator component is, for example, the name or the number of the operator component. In the description hereinafter, an example will be described where the name of the operator component is used as the identification information. The name of the operator component may be, for example, service invocation, an arbitrary command, service state confirmation, file replication, etc. In some cases, operator components of the same name operate different objects.

The execution history data in the execution history DB 110 may associate information indicating the state of the operator component when the operator component was executed at the time of execution of the automated administrative process during actual operation. Information indicating the state of the object is that which indicates, for example, whether the object is operating properly or has stopped, or whether the object is not operating properly or has stopped.

The state of the object can be identified from the CMDB 120. The CMDB 120 centrally manages configuration data of configuration items configuring the IT system. The CMDB 120 can associate and manage the configuration items. A configuration item is, for example, a server, an application, a work unit, or a job queue in the IT system. Configuration data includes, for example, information indicating the state of each configuration item.

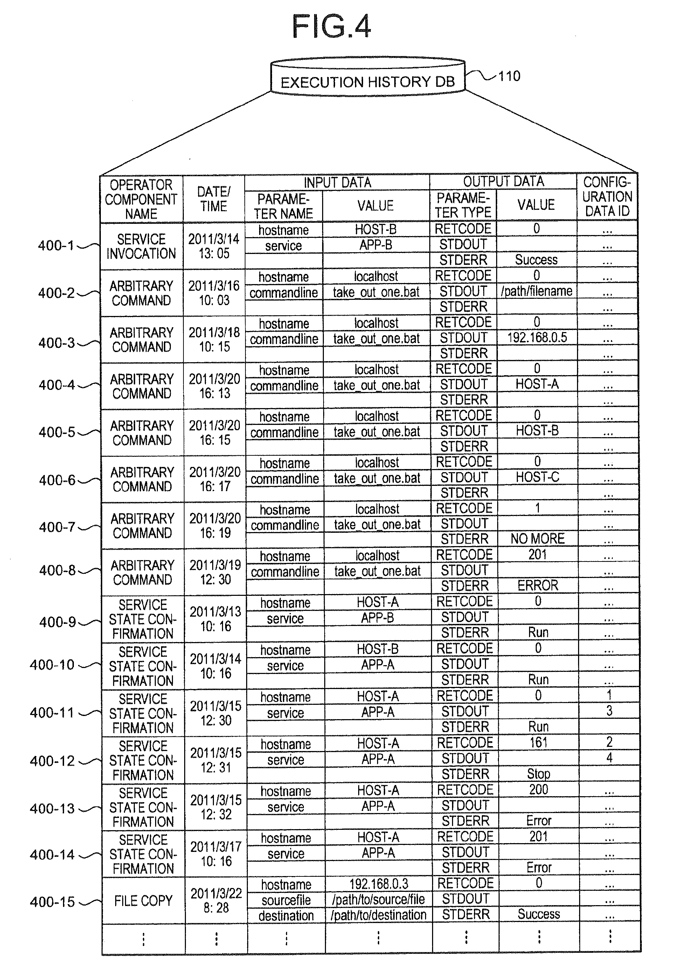

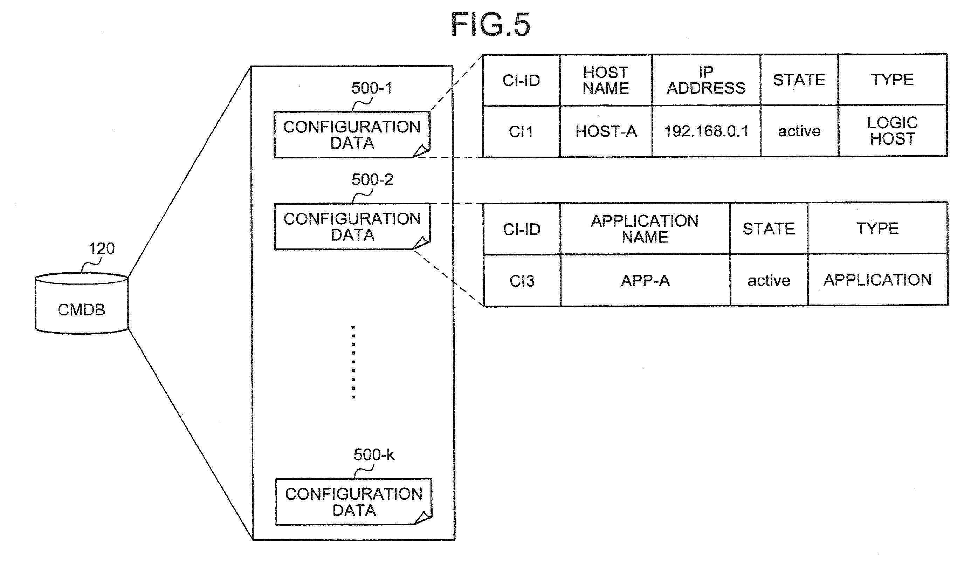

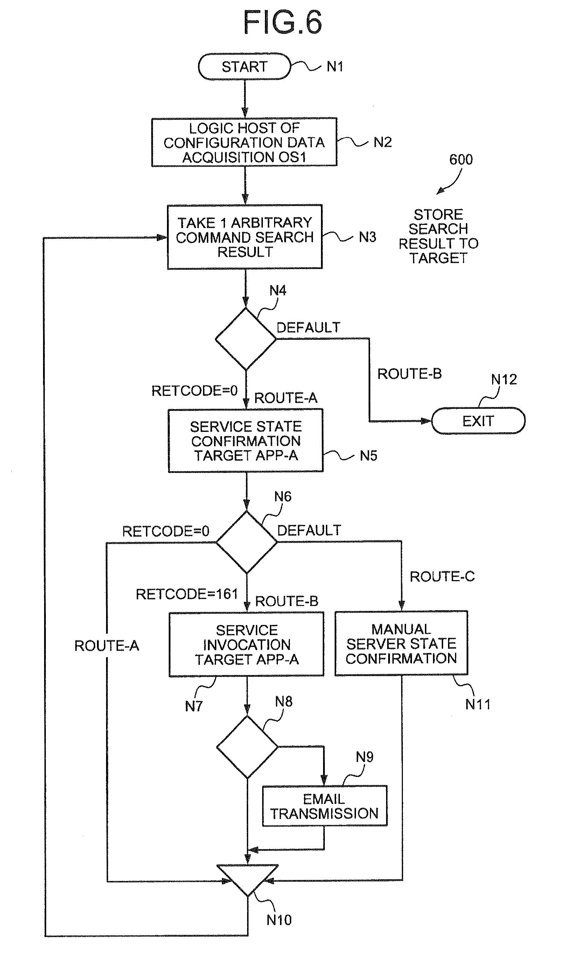

In the example depicted in FIG. 1, execution history data A to C that correspond to the name of an operator component 140 included in an automated administrative process 130 under test under test are retrieved from the execution history DB 110. Contents of the execution history DB 110 will be described with reference to FIG. 4. Contents of the CMDB 120 will be described with reference to FIG. 5. Detailed description of the automated administrative process will be given with reference to FIG. 6.

(2) The test support apparatus 101, based on the input data of each retrieved execution history data and the input data of the component under test, determines from among the output data of the retrieved execution history data, output data candidates in the case of execution of the component under test. As described, the parameters of the input data, for example, represent the object types. Therefore, by comparing the input data of the component under test and the input data of each execution history data, for example, execution history data for an object that is the same as the object of the component under test can be identified.

For example, the test support apparatus 101 compares the input data 150 of the operator component 140 and the input data a to c of each execution history data A to C. The input data 150 of the operator component 140 is, for example, defined in the automated administrative process 130 as information input to the mock of the operator component 140.

The test support apparatus 101, based on the result of comparing the input data 150 of the operator component 140 and each input data a to c, determines output data candidates for the operator component 140, from among the respective output data a to c of the execution history data A to C. Consequently, for example, output data corresponding to input data that is among the input data a to c and that is for an object that is the same as the object that the input data 150 is for, can be determined as an output data candidate for the operator component 140.

The test support apparatus 101 compares the state of the object identified from the input data 150 of the operator component 140 and the state of the each object identified from the input data a to c. Here, the state of the object identified from the input data 150 is the state of the object when the mock of the operator component 140 is executed during the test of the automated administrative process 130 and can be identified from the CMDB 120, for example. The state of each object identified from the input data a to c can be identified from the execution history data A to C.

The test support apparatus 101, based on the result of comparing the states of the objects, may determine output data candidates for the operator component 140, from among the output data a to c. Consequently, for example, among the output data a to c, output data in which the state of the object that is subject to operation when the operator component is executed during actual operation is the same as the state of the same object that is subject to operation when the mock of the operator component 140 is executed in the test can be determined as an output data candidate for the operator component 140.

In the example depicted in FIG. 1, the output data a and c are determined as output data candidates for the operator component 140, from among the output data a to c. The output data a is for an object that is identical to that of the operator component 140 and the state of the object is identical to that when the mock of the operator component 140 is executed. The output data c is for an object that is identical to that of the operator component 140. Output data candidates for the operator component 140 are, for example, presented to the test engineer of the automated administrative process 130.

According to the test support method of the first embodiment, past output data output from operator components of the same name as the component under test, can be narrowed down to output data candidates that have a high potential of being output as output data of the mock of the component under test. Consequently, output data candidates for the component under test can be presented to the test engineer of the automated administrative process, enabling the burden involved in setting output data for the mock of the component under test to be reduced and efficiency of the test of the automated administrative process to be facilitated.

An operations management system 200 according to a second embodiment will be described. Here, the test support apparatus 101 according to the first embodiment is adopted for a management server 201 in the operations management system 200.

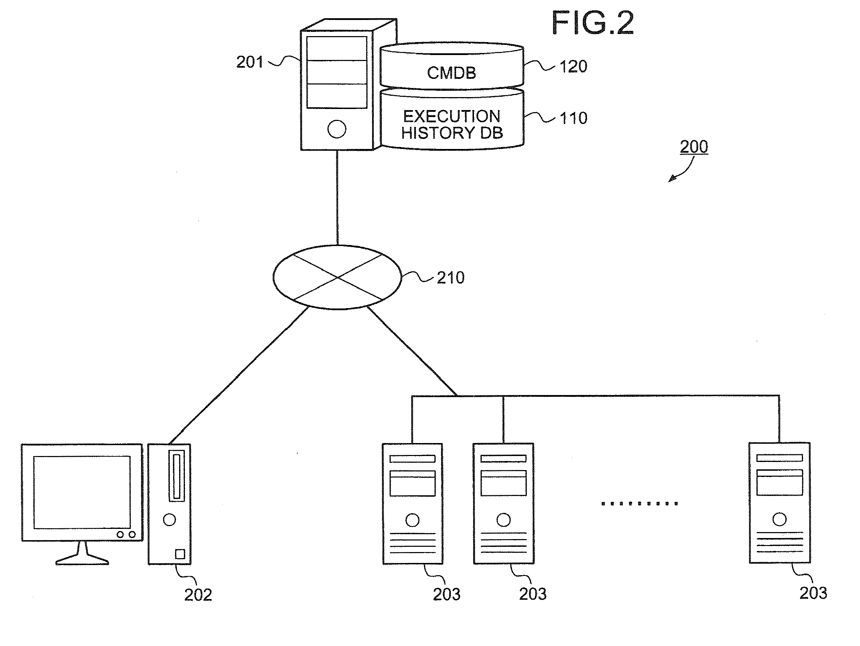

FIG. 2 is a diagram depicting an example of system configuration of the operations management system 200 according to the second embodiment. In FIG. 2, the operations management system 200 includes the management server 201, a development terminal 202, and multiple servers 203 subject to operation. In the operations management system 200, the management server 201, the development terminal 202 and the servers 203 are connected through a wired or wireless a network 210. The network 210 is, for example, a local area network (LAN), a wide area network (WAN), the internet, etc.

Here, the management server 201 is a computer that includes the execution history DB 110 and the CMDB 120, and manages the execution of the automated administrative process and the execution results. The development terminal 202 is a computer used by the user of the operations management system 200. The user, for example, is a development engineer or a test engineer of the automated administrative process. The user can create and test the automated administrative process, using the development terminal 202.

The servers 203 are objects that are subject to operation by operator components. The servers 203, for example, have applications or files that are objects subject to operation by operator components. The system subject to operations management is, for example, implemented by the servers 203.

An example of a hardware configuration of the management server 201, the development terminal 202, and the servers 203 (hereinafter, "computer") depicted in FIG. 2 will be described.

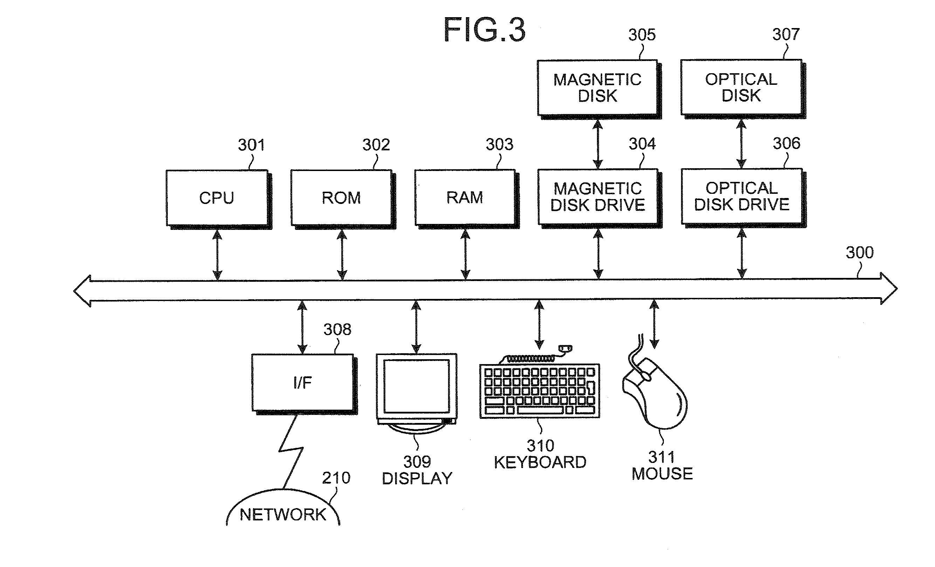

FIG. 3 is a block diagram depicting an example of a hardware configuration of the computer. In FIG. 3, the computer includes a central processing unit (CPU) 301, a read-only memory (ROM) 302, a random access memory (RAM) 303, a magnetic disk drive 304, a magnetic disk 305, an optical disk drive 306, an optical disk 307, an interface (I/F) 308, a display 309, a keyboard 310, and a mouse 311, respectively connected by a bus 300.

The CPU 301 governs overall control of the computer. The ROM 302 stores therein programs such as a boot program. The RAM 303 is used as a work area of the CPU 301. The magnetic disk drive 304, under the control of the CPU 301, controls the reading and writing of data with respect to the magnetic disk 305. The magnetic disk 305 stores therein data written under control of the magnetic disk drive 304.

The optical disk drive 306, under the control of the CPU 301, controls the reading and writing of data with respect to the optical disk 307. The optical disk 307 stores therein data written under control of the optical disk drive 306, the data being read by the computer.

The I/F 308 is connected to the network 210 through a communication line and is connected to other apparatuses through the network 210. The I/F 308 administers an internal interface with the network 314 and controls the input/output of data from/to external apparatuses. For example, a modem or a LAN adaptor may be employed as the I/F 308.

The display 309 displays, for example, data such as text, images, functional information, etc., in addition to a cursor, icons, and/or tool boxes. A cathode ray tube (CRT), a thin-film-transistor (TFT) liquid crystal display, a plasma display, etc., may be employed as the display 309.

The keyboard 310 includes, for example, keys for inputting letters, numerals, and various instructions and performs the input of data. Alternatively, a touch-panel-type input pad or numeric keypad, etc. may be adopted. The mouse 311 is used to move the cursor, select a region, or move and change the size of windows. A track ball or a joy stick may be adopted provided each respectively has a function similar to a pointing device.

Configuration of the management server 201 and the server 203 may be such that among the components above, the optical disk drive 306, the optical disk 307, the display 309, the keyboard 310, and the mouse 311 are not included. The development terminal 202, for example, may further include a scanner and/or printer in addition to the components above.

Contents of the execution history DB 110 will be described. The execution history DB 110, for example, is implemented by a storage device such as the RAM 303, the magnetic disk 305, and the optical disk 307 depicted in FIG. 3.

FIG. 4 is a diagram depicting an example of contents of the execution history DB 110. In FIG. 4, the execution history DB 110 has fields for operator component names, dates and times, input data, output data, and configuration data IDs. The input data field has sub-fields for parameter names and parameter values. The output data field has sub-fields for parameter types and parameter values. By entering information into the fields, execution history data (e.g., execution history data 400-1 to 400-15) is stored for each operator component as a record.

Here, the operator component name is the name of the component of the operator component. The time and date are the time and date when the operator component was operated. The input data is data input to operator component. For example, the parameter name is the name of the parameter input to the operator component and the parameter value is the value of the parameter input to the operator component.

The output data is data output from an object subject to operation by the operator component. For example, the parameter type is the type of parameter output from the operator component and the parameter value is the value of the parameter output from the operator component. The configuration data ID is an identifier of configuration data specifying the state of a configuration item that is an object of the operator component.

For example, execution history data 400-1 indicates that the operator component "service invocation" was operated "2011/3/14 13:05", that the parameter value "HOST-B" of the parameter name "hostname" and the parameter value "APP-B" of the parameter name "service" were input as input data to the operator component "service invocation", and that the parameter value "0" of the parameter type "RETCODE" and the parameter value "Success" of the parameter type "STDERR" were output as output data, from the object of the operator component "service invocation".

The contents of the execution history DB 110, for example, are updated when the operator component is executed when the automated administrative process is executed during actual operation.

Contents of the CMDB 120 will be described. The CMDB 120, for example, is implemented by a storage device such as the RAM 303, the magnetic disk 305, and the optical disk 307 depicted in FIG. 3.

FIG. 5 is a diagram depicting an example of contents of the CMDB 120. In FIG. 5, the CMDB 120 stores configuration data 500-1 to 500-k related to configuration items in the IT system. The configuration data 500-1 to 500-k includes, for example, attribute information indicating characteristics of the configuration items and type information classifying the configuration items.

An attribute of a configuration item is, for example, the name of the configuration item, a configuration component, an address, and a state. The name of the configuration item may be, for example, a server name, an application name, a file name, a process name, a work unit name, etc. The address of the configuration item may be, for example, an IP address.

A configuration component of the configuration item may be, for example, a CPU, memory, etc. The state of the configuration item may be, for example, "active" indicating that the configuration item is operating properly and "inactive" indicating that the configuration item is properly stopped. The type of the configuration item may be, for example, logic host, application, etc. In the figure, configuration item-ID (CI-ID) is the identifier of the configuration item.

For example, configuration data 500-1 indicates a host name "HOST-A", an IP address "192.168.0.1" and a state "active" as attribute information characterizing a configuration item CI1 as well as a type "logic host" as the type information.

For example, configuration data 500-2 indicates an application name "APP-A" and a state "active" as attribute information characterizing a configuration item CI3 as well as a type "application" as the type information.

A detailed example of an automated administrative process will be described. An automated administrative process, for example, is created by the development terminal 202 depicted in the FIG. 2. In the automated administrative process, for example, the types of nodes representing tasks among a series of tasks related to system administration and relations between the nodes are defined.

Node types include, for example, start nodes representing the start of the automated administrative process, operator component nodes representing operator components, branch nodes representing conditional branches, and end nodes representing the end of the automated administrative process. In an operator component node, input data to be input to an operator component is defined. In a branch node, a branch condition and a branch path (hereinafter, "branch route") corresponding to input are defined.

FIG. 6 is a diagram depicting a detailed example of an automated administrative process. In FIG. 6, an automated administrative process 600 includes nodes N1 to N12. In the figure, a portion of the contents described as the automated administrative process 600 is depicted.

In the automated administrative process 600, node N1 is a start node representing the start of the automated administrative process 600. Node N12 is an end node representing the end of the automated administrative process 600. For example, nodes N3, N5, and N7 are operator components that operate objects. The name of the operator component of node N3 is "arbitrary command". The name of the operator component of node N5 is "service state confirmation". The name of the operator component of node N7 is "service invocation". Further, for example, nodes N4 and N6 are branch nodes representing conditional branches.

Contents of a property table 700 used by the management server 201 will be described. The property table 700 is implemented by a storage apparatus such as the RAM 303, the magnetic disk 305, and the optical disk 307 of the management server 201.

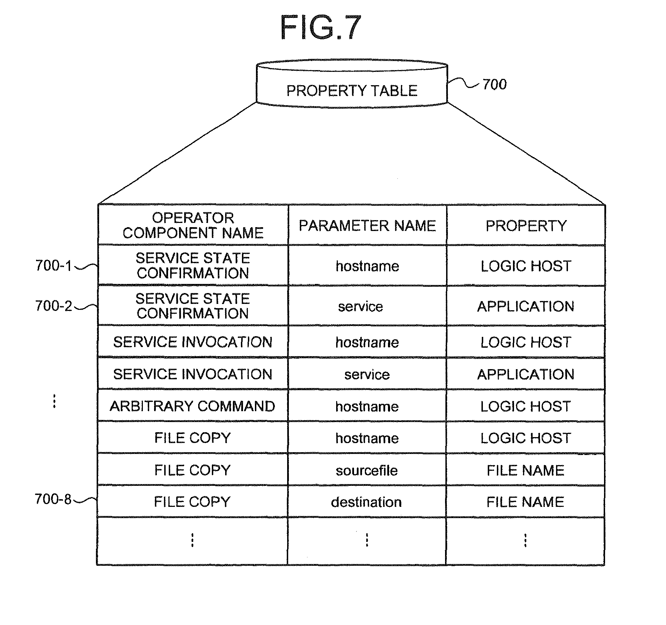

FIG. 7 is a diagram depicting an example of contents of the property table 700. In FIG. 7, the property table 700 has fields for operator component names, parameter names, and properties. By entering data into the fields, property data (e.g., property data 700-1 to 700-8) are stored as records.

Here, the operator component name is the name of the component of the operator component. The parameter name is the name of the parameter provided as input data to the operator component. The property is a property of a parameter of the input data input to the operator component and is information identifying the object subject to operation by the operator component. A property of the input data may be, for example, a host name, and IP address, a file name, an application name, a process name, a work unit name, etc.

For example, property data 700-1 indicates a property "logic host" of a parameter "hostname" provided to an operator component "service state confirmation" as the input data. Property data 700-2 indicates a property "application" of a parameter "service" provided to an operator component "service state confirmation" as input data.

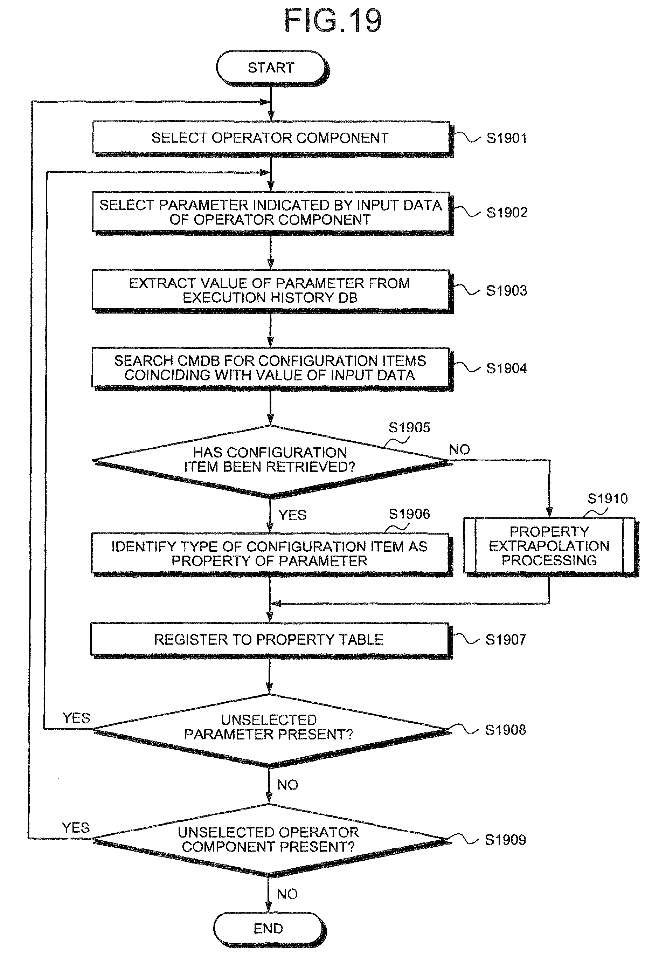

The property table 700 may be, for example, preliminarily created or created and updated based on the contents of the execution history DB 110. For example, the contents of the property table 700 may be periodically (e.g., once a day) updated based on the contents of the execution history DB 110. Update processing for updating the contents of the property table 700 will be described in detail with reference to FIGs. 19 to 21.

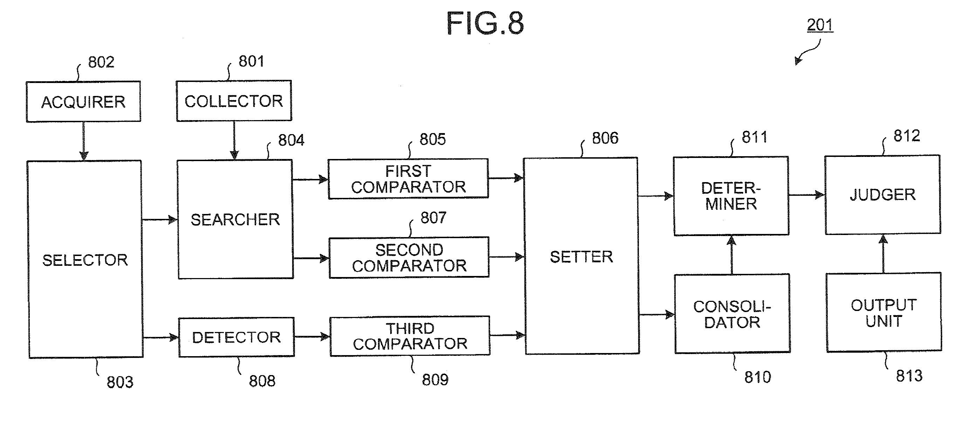

FIG. 8 is a block diagram of a functional configuration of the management server 201 according to the second embodiment. In FIG. 8, the management server 201 includes a collector 801, an acquirer 802, a selector 803, a searcher 804, a first comparator 805, a setter 806, a second comparator 807, a detector 808, a third comparator 809, a consolidator 810, a determiner 811, a judger 812, and an output unit 813. These functions (the collector 801 to the output unit 813) forming a controller, for example, are implemented by executing on the CPU 301, a program stored in a storage device such as the ROM 302, the RAM 303, the magnetic disk 305, and the optical disk 307 of the management server 201 and depicted in FIG. 3, or by the I/F 308. Processing results of the functional units are, for example, stored to a storage device such as the RAM 303, the magnetic disk 305, and the optical disk 307 of the management server 201.

The collector 801 has a function of collecting execution history data of the operator components. The operator components are operator components included in an automated administrative process under actual operation in a system that is under operations management. For example, when any of the operator components included in an automated administrative process under actual operation has been executed, the collector 801 registers to the execution history DB 110, execution history data that includes the input data and the output data of an operator component. The input data of the operator component includes the value of each parameter input to the operator component. The output data of the operator component includes the value of each parameter output from the object subject to operation by the operator component.

The collector 801 has a function of collecting information identifying the state of the object of the operator component. For example, when an operator component that is under actual operation has been executed, the collector 801 selects the input data (parameter values) of the operator component. Next, the collector 801 refers to the property table 700 depicted in FIG. 7 and identifies the properties of the selected input data.

The collector 801 retrieves, from the CMDB 120, configuration data that has the identified properties of the input data set as the type of the configuration item and the selected input data set as the name of the configuration item. The configuration data is information indicating the state of the configuration item that is the object subject to operation by the operator component.

For example, in the case of the execution history data 400-11 depicted in FIG. 4, the collector 801 selects the value "HOST-A" of the parameter "hostname", as the input data of operator component "service state confirmation". Next, the collector 801 refers to the property table 700 and identifies the property "logic host" corresponding to the parameter "hostname" of the operator component "service state confirmation".

Next, the collector 801, from the CMDB 120, retrieves configuration data that has the property "logic host" of the input data set as the type of the configuration item and the value "HOST-A" of the parameter "hostname" as the name of the configuration item. The retrieved configuration data is, for example, associated with the execution history data 400-11 and stored to the execution history DB 110.

In the example depicted in FIG. 4, in the configuration data ID field of the execution history data 400-11, the configuration data ID "1" identifying the retrieved configuration data has been entered. Here, the configuration data corresponding to the configuration data IDs in the configuration data ID fields of the execution history data 400-11 and 400-12 will be described.

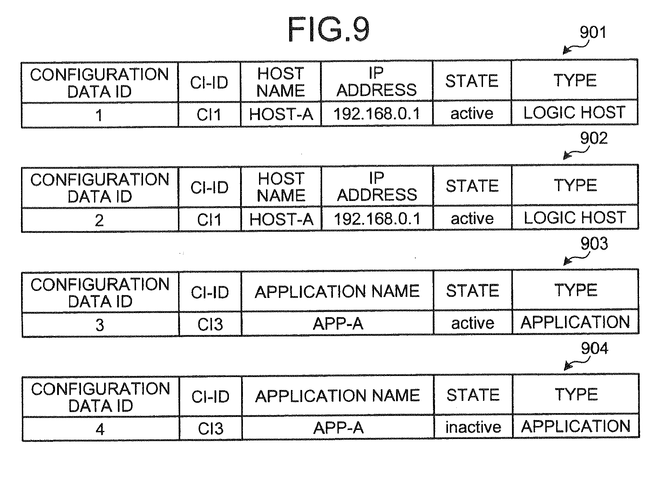

FIG. 9 is a diagram depicting an example of configuration data associated with the execution history data. In FIG. 9, configuration data 901 and 903 are the configuration data associated with the execution history data 400-11 in the execution history DB 110. The configuration data 902 and 904 are configuration data associated with the execution history data 400-12 in the execution history DB 110.

Thus, concerning the configuration items that are the objects of the operator components, the states of the configuration items when each of the operator components that are under actual operation are executed can be identified. Since, the state of each configuration item dynamically changes, the configuration data ID is used as the identifier of the configuration data identifying the state of the configuration item at the time when the operator component was executed.

The acquirer 802 has a function of acquiring an automated administrative process to be tested. The automated administrative process to be tested is information that includes, for example, a flowchart depicting a series of tasks related to system administration, definitions of each type of process, etc.

In the description hereinafter, unless specified, the automated administrative process under test is referred to as the "automated administrative process" and a series of tasks included in the automated administrative process TP is referred to as "nodes N1 to Nn" (where, n is a natural number).

For example, the acquirer 802 may receive, from the development terminal 202, the automated administrative process 600 (see FIG. 6) as a test subject. The acquirer 802 may, for example, acquire the automated administrative process 600 consequent to a user input operation via the keyboard 310 and/or the mouse 311 of the management server 201 depicted in FIG. 3.

The selector 803 has a function of selecting from among the nodes N1 to Nn included in the automated administrative process TP, a node (hereinafter "component node") representing an operator component. For example, when consequent to the start of the test of the automated administrative process TP, a node that is to be executed among the nodes N1 to Nn becomes a component node, the selector 803 selects the component node. The selector 803 may, for example, select a component node that has been selected from among the nodes N1 to Nn by a user input operation of the development terminal 202.

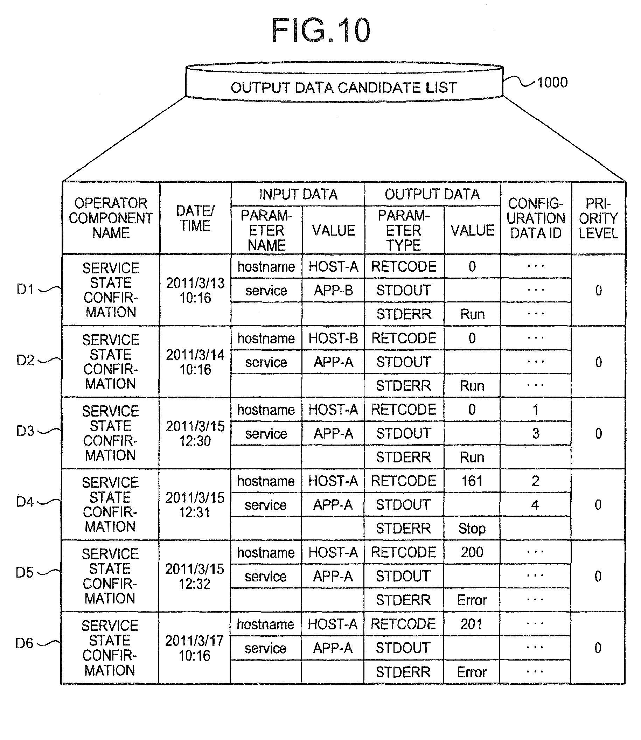

The searcher 804 has a function of searching the execution history DB 110, for execution history data that corresponds to the name of the operator component of the selected component node (hereinafter, a "component node under test"). The name of the operator component of the component node under test is, for example, defined in the automated administrative process TP. The retrieved execution history data, for example, is stored in an output data candidate list 1000 depicted in FIG. 10 and described hereinafter.

In the description hereinafter, a set of input data for each retrieved execution history data is referred to as "input data Il to Im and an arbitrary input data among the input data Il to Im is referred to as "input data Ij" (where, m is a natural number). A set of output data for each retrieved execution history data is referred to as "output data O1 to Om and an arbitrary output data among the output data O1 to Om is referred to as "output data Oj".

The first comparator 805 has a function of comparing the object identified from the input data of the component node under test and each object identified from the input data Il to Im. Here, the input data of the component node under test is, for example, defined in the automated administrative process TP as input data to be input to the mock of the component node under test.

For example, the first comparator 805 acquires from the automated administrative process TP, input data that is to be input to the mock of the component node under test. The first comparator 805 compares the value of the parameter indicated by the acquired input data of the component node under test and the value of the parameter indicated by the input data Ij.

In other words, the parameter indicated by the input data indicates the type of object (i.e., host name, application name) and thus, the first comparator 805 compares objects by comparing the value of the parameters indicated by the input data. An example of comparison of the values of parameters indicated by input data will be described with reference to FIG. 10.

The setter 806 has a function of setting the priority level of each output data O1 to Om, based on comparison results obtained by the first comparator 805. Here, a priority level is an index indicating the potential of output data Oj being output as output data of the component node under test.

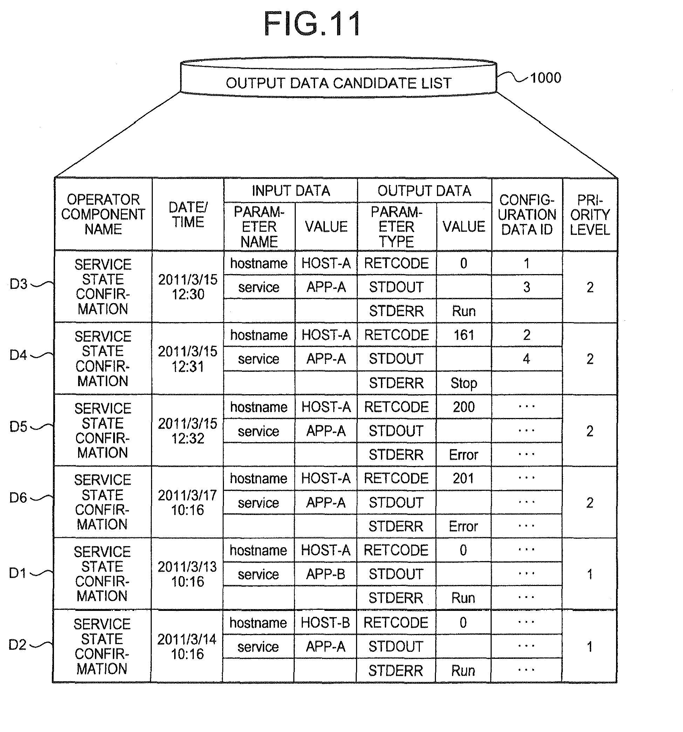

For example, the setter 806 may set, as the priority level for the output data Oj, the number of parameters (among the parameters indicated by the input data Ij) whose value coincides with that of the parameter indicated by the input data of the component node under test. The set priority levels are, for example, stored to the output data candidate list 1000. An example of setting the priority level of the output data Oj, based on comparison results obtained by the first comparator 805 will be described with reference to FIG. 11.

The second comparator 807 has a function of comparing the state of the object identified from the input data of the component node under test (the state being during execution of the component node under test) and the state of each object identified from the input data Il to Im (the state being during execution of the component nodes).

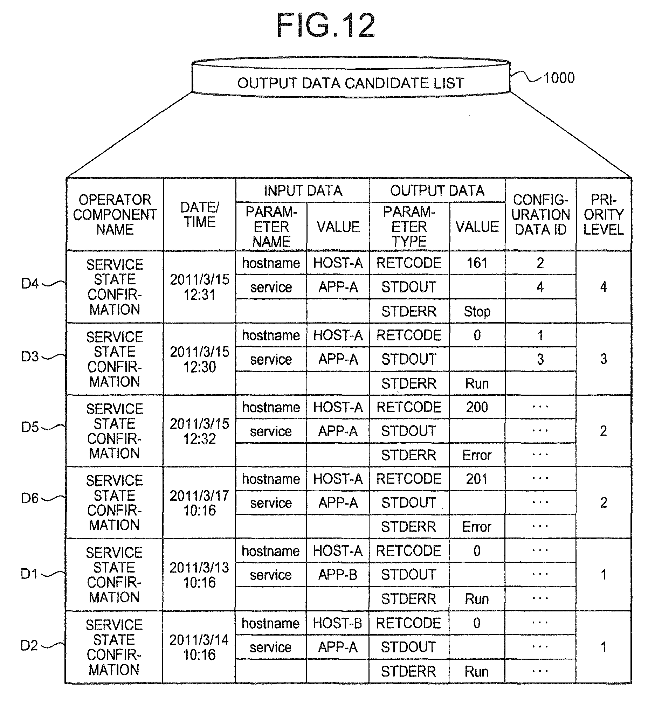

The state of the object of the component node under test, for example, can be identified from the CMDB 120. The state of the object identified from the input data Ij, for example, can be identified from the configuration data associated with the execution history data in the execution history DB 110. An example of comparison processing by the second comparator 807 will be described with reference to FIG. 12.

The setter 806 has a function of setting priority levels for the output data O1 to Om, based on comparison results obtained by the second comparator 807. For example, the setter 806 may set, as the priority level for the output data Oj, the number of objects (among the objects identified from the input data Ij) whose state coincides with that of the object of the component node under test. An example of setting the priority level the output data Oj, based on comparison results obtained by the second comparator 807 will be described with reference to FIG. 12.

The detector 808 has a function of detecting from among a group of nodes that are among the nodes N1 to Nn included in the automated administrative process TP and subsequent to the component node under test, a component node to which the output data of the component node under test is provided as input data. The output data of a previous component node is, for example, defined in the automated administrative process TP.

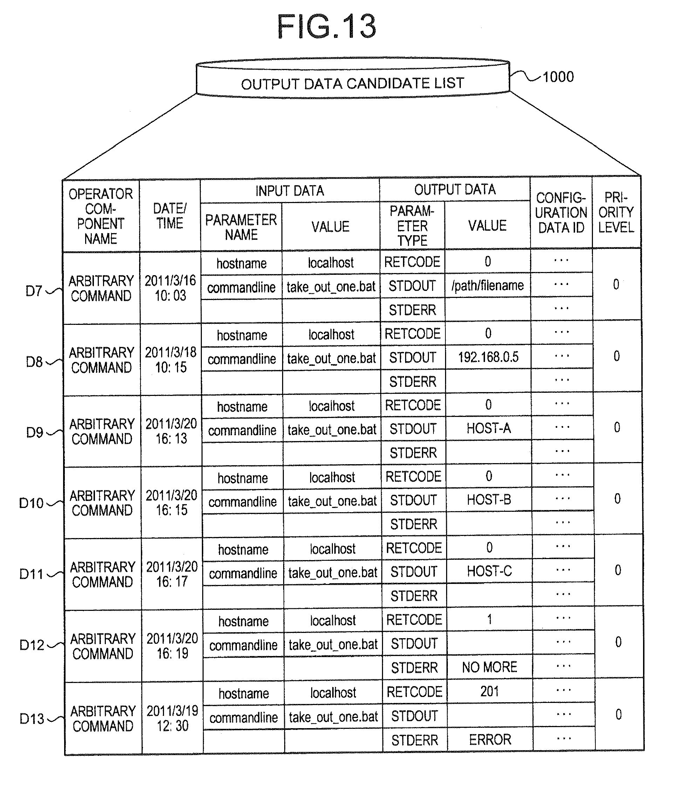

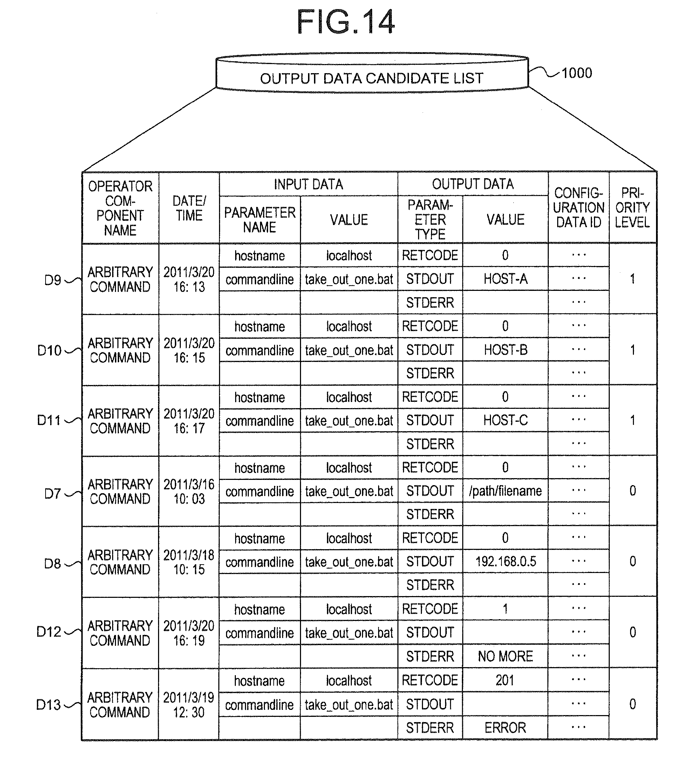

If multiple component nodes to which the output data of the component node under test is provided as input data are present, the detector 808 may detect in the automated administrative process TP, a component node whose distance from the component node under test is the least. An example of component node detection will be described with reference to FIGs. 13 and 14.

The third comparator 809 has a function of comparing the type of the object identified from the input data of the detected component node and the types of the objects identified from the output data O1 to Om. An example of the comparison processing by the third comparator 809 will be described with reference to FIGs. 13 and FIG. 14.

The setter 806 has a function of setting based on comparison results obtained by the third comparator 809, priority levels for the output data O1 to Om. For example, the setter 806 may set (or add) a given value X as the priority level of the output data Oj, when the type of the object identified from the output data Oj and the type of the object identified from the input data of the detected component node coincide.

The given value X is, for example, preliminarily set and stored in a storage device of the management server 201. The given value X is, for example, "X=1" or "X=2". An example of setting the priority level of the output data Oj, based on comparison results obtained by the third comparator 809 will be described with reference to FIGs. 13 and 14.

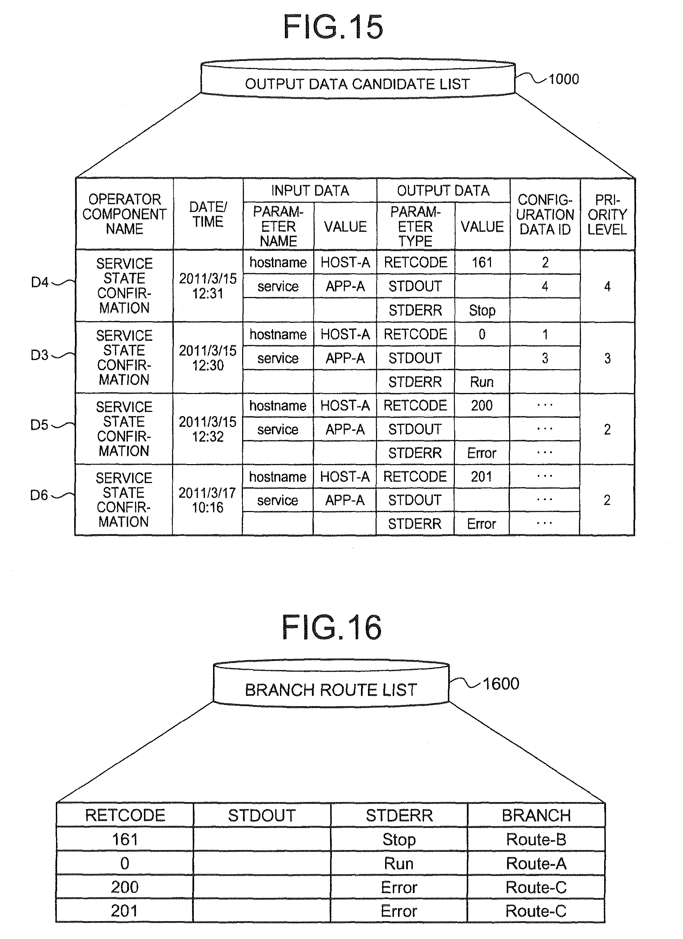

The consolidator 810 has a function of consolidating the output data O1 to Om. For example, when the value of a parameter indicated by a first output data and the value of a parameter indicated by a second output data coincide, the consolidator 810 may consolidate the first output data and the second output data. An example of output data consolidation will be described with reference to FIG. 15.

The determiner 811 has a function of determining from among the output data O1 to Om, output data candidates for a case when the component node under test is executed. For example, from among the output data O1 to Om, the determiner 811 may determine, as output data candidates, N output data in descending order of priority level. If the output data O1 to Om have been consolidated, the determiner 811 determines the output data candidates from among the consolidated output data.

The determiner 811 may determine from among the output data O1 to Om and as output data candidates, output data whose priority level is greater than or equal to a given threshold α. The determiner 811 may determine from among the output data O1 to Om and as output data candidates, N output data whose priority level is greater than or equal to the given threshold α.

Further, "N" and "α", for example, are preliminarily set and stored to a storage device of the management server 201. N is, for example, N=5 or "N=10", and α is, for example, "α=2" or "α=3".

The judger 812 has a function of judging whether, among the nodes N1 to Nn included in the automated administrative process TP, the subsequent node executed after the component node under test is a branch node representing a conditional branch. For example, the judger 812 judges the subsequent node to be a branch node when a branch condition is defined in the subsequent node.

When the node executed after the component node under test is a branch node, the judger 812 identifies based on the branch condition of the branch node, the branch route for a case where an output data candidate of the component node under test is provided to the branch node. A branch condition of the branch node is, for example, defined in the automated administrative process TP. An example of branch route identification will be described with reference to FIG. 16.

Although the judger 812 has been described to identify the branch route for a case where an output data candidate of the component node under test is provided to the branch node, configuration is not limited hereto. For example, when the node executed after the component node under test is a branch node, the judger 812 may identify based on the branch condition of the branch node, the branch routes for cases where each of the output data Oj are provided to the branch node.

The output unit 813 has a function of outputting the output candidates determined by the determiner 811 for a case where the component node under test is executed. For example, the output unit 813 may transmit to the development terminal 202, selection screen information for displaying the determined output data candidates. Consequently, a selection screen for selecting the output data of the mock of the component node under test is displayed on the display 309 of the development terminal 202.

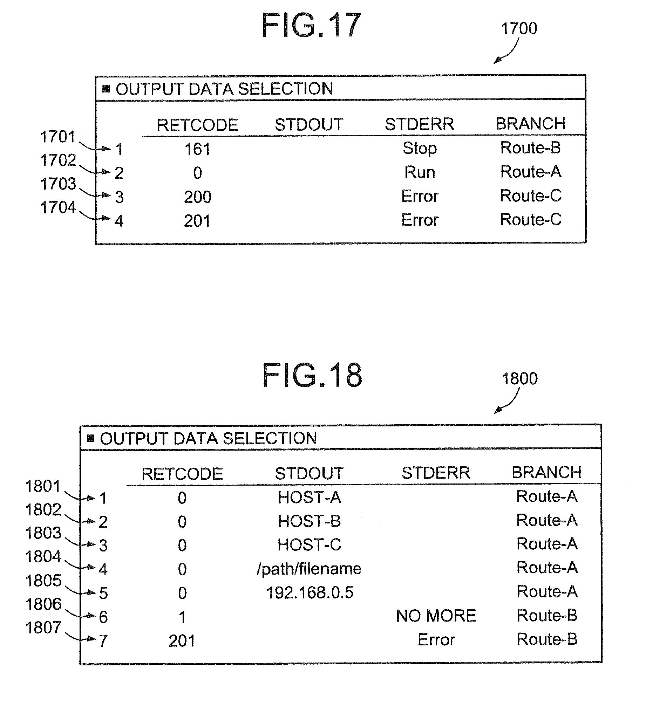

The output unit 813 may output together with the output data candidates for a case where the component node under test is executed, the branch routes for a case where the output data candidates of the component node under test are provided to the branch node. An example of the selection displayed on the display 309 of the development terminal 202 will be described with reference to FIGs. 17 and 18.

In addition to transmission to an external apparatus, the form of output of the output unit 813 may be, for example, display on the display 309 of the management server 201, storage to a storage device, and print out at a printer (not depicted).

An example where node N5 included in the automated administrative process 600 is selected as the component node under test will be given and the contents of the output data candidate list 1000 will be described. The output data candidate list 1000 is, for example, stored to a storage device such as the RAM 303, the magnetic disk 305, and the optical disk 307 of the management server 201.

FIG. 10 is a diagram depicting a first example of the contents of the output data candidate list 1000. In FIG. 10, the output data candidate list 1000 has fields for operator component names, dates and times, input data, output data, configuration data IDs and priority levels. By entering information into the fields, output candidate data D1 to D6 are stored as records.

The output candidate data D1 to D6 are information that is based on the execution history data 400-9 to 400-14 retrieved from the execution history DB 110, by the searcher 804 using the operator component name "service state confirmation" of the node N5 as a hint.

Here, the priority levels are indices indicating the potential that the output data of the output candidate data D1 to D6 has of being output as the output data of the component node under test. The greater the priority level is, higher the potential the corresponding output data has of being output as the output data of the component node under test. The initial value of a priority level is "0".

An example of setting the priority level of an output data Oj, based on comparison results obtained by the first comparator 805 will be described. Here, the input data provided to the mock of the component node under test "service state confirmation" is assumed to be described in the automated administrative process 600 as indicated below.
node N5 (component node under test)
hostname=HOST-A
service=APP-A

The first comparator 805 compares the value of the parameter indicated by the input data of the component node under test and the values of the parameters indicated by the input data of the output candidate data D1 to D6.

For example, the values of the parameters indicated by the input data of the output candidate data D3 are as follows. Thus, the values of the parameters indicated by the input data of the output candidate data D3 completely coincide with the values of the parameters indicated by the input data of the component node under test.
output candidate data D3
hostname=HOST-A
service=APP-A

In this case, for example, among the parameters indicated by the input data of the output candidate data D3, the setter 806 sets, as the priority level of the output data of the output candidate data D3, the number of parameters (e.g., 2) whose values coincide with those of parameters indicated by the input data of the component node under test. Processing concerning the output candidate data D4 to D6 is similarly performed.

The values of the parameters indicated by the input data of the output candidate data D1 are as follows. Consequently, for the input data of the output candidate data D1, there is coincidence concerning the value "HOST-A" of the parameter "hostname" indicated by the input data of the component under test.
output candidate data D1
hostname=HOST-A
service=APP-B

In this case, for example, among the parameters indicated by the input data of the output candidate data D1, the setter 806 sets as the priority level of the output data of the output candidate data D1, the number of parameters (e.g., 1) whose values coincide with those of the parameters indicated by the input data of the component node under test.

The values of the parameters indicated by the input data of the output candidate data D2 are as follows. Consequently, for the input data of the output candidate data D2, there is coincidence concerning the value "APP-A" of the parameter "service" indicated by the input data of the component under test.
output candidate data D2
hostname=HOST-B
service=APP-A

In this case, for example, among the parameters indicated by the input data of the output candidate data D2, the setter 806 sets as the priority level of the output data of the output candidate data D2, the number of parameters (e.g., 1) whose values coincide with those of the parameters indicated by the input data of the component node under test. The set priority levels of the output data of the output candidate data D1 to D6 are stored to the output data candidate list 1000.

FIG. 11 is diagram depicting a second example of the contents of the output data candidate list 1000. In FIG. 11, the priority level fields of the output candidate data D3 to D6 are set as "2", respectively. Further, the priority level fields of the output candidate data D1 and D2 are set as "1" respectively. In the figure, the output candidate data D1 to D6 are sorted in descending order of priority level fields.

An example of the setting of the priority level field of the output data Oj based on the comparison results obtained by the second comparator 807 will be described. In this example, similar to that above, the input data provided to the mock of the component node under test "service state confirmation" is assumed to be defined in the automated administrative process 600 as follows.
node N5 (component node under test)
hostname=HOST-A
service=APP-A

In this case, the second comparator 807 selects the parameter "hostname" and the value "HOST-A" indicated by the input data of the component node under test "service state confirmation". The second comparator 807 refers to the property table 700 and identifies the property "logic host" that corresponds to the selected parameter "hostname".

The second comparator 807 retrieves from the CMDB 120, the configuration data for which the type of the configuration item is set as the property "logic host" and the name of the configuration item is set as the value "HOST-A" of the parameter "hostname". In the example depicted in FIG. 5, configuration data 500-1 is retrieved.

Thus, the state "active" of the configuration item CI1 that is the object subject to operation by the component node under test during execution of the component node under test can be identified.

The second comparator 807 selects the parameter "service" and the value "APP-A" indicated by the input data of the component node under test "service state confirmation". The second comparator 807 refers to the property table 700 and identifies the property "application" that corresponds to the selected parameter "service".

The second comparator 807 retrieves from the CMDB 120, the configuration data for which the type of the configuration item is set as the property "application" and the name of the configuration item is set as the value "APP-A" of the parameter "service". In the example depicted in FIG. 5, configuration data 500-2 is retrieved.

Thus, the state "active" of the configuration item CI3 that is the object subject to operation by the component node under test during execution of the component node under test can be identified. In other words, the states of the objects of the component node under test are as follows.
node N5 (component node under test)
state of configuration item CI1=active
state of configuration item CI3=active

On the other hand, concerning the states of the objects identified by the input data of the output candidate data D1 to D6 output, taking candidate data D3 as an example, from the configuration data 902 and 904 of the configuration data IDs "1" and "3", the following is true (see FIG. 9).
output candidate data D3
state of configuration item CI1=active
state of configuration item CI3=inactive

In this case, the setter 806, for example, among the configuration items identified from the input data of the output candidate data D3, the number of configuration items (1) whose state coincides with that of the configuration item of the component node under test is added to the priority level of the output data of the output candidate data D3.

Taking output candidate data D4 as an example, from the configuration data 901 and 903 of the configuration data IDs "2 and "4", the following is true (see FIG. 9).
output candidate data D4
state of configuration item CI1=active
state of configuration item CI3=active

In this case, the setter 806, for example, among the configuration items identified from the input data of the output candidate data D4, the number of configuration items (2) whose state coincides with that of the configuration item of the component node under test is added to the priority level of the output data of output candidate data D4.

FIG. 12 is diagram depicting a third example of the contents of the output data candidate list 1000. In FIG. 12, the priority field of the output candidate data D4 is set as "4" and the priority field of the output candidate data D is set as "33".

The contents of the output data candidate list 1000 will be described with an example where node N3 included in the automated administrative process 600 is selected as the component node under test.

FIG. 13 is diagram depicting a fourth example of the contents of the output data candidate list 1000. In FIG. 13, the output data candidate list 1000 has fields for operator component names, dates and times, input data, output data, configuration data IDs and priority levels. By entering data into the fields, the output candidate data D7 to D13 are stored as records.

The output candidate data D7 to D13 are information that is based on the execution history data 400-2 to 400-8 retrieved from the execution history DB 110, by the searcher 804 using the operator component name "arbitrary command" of the node N3 as a hint.

An example of setting the priority level of the output data Oj, based on the comparison results obtained by the third comparator 809 will be described. Here, the following contents are assumed to be defined in the automated administrative process 600, as the output data of the previous component node, provided to the node N5 as input data.
node N5
hostname=target

In this case, among the nodes N1 to N12 included in the automated administrative process 600, the detector 808 detects from among the nodes N4 to N12 subsequent to the component node under test (node N3), the component node N5 that is a component node to which the output data of the node N3 is provided as input data.

The third comparator 809 refers to the property table 700, and identifies the property "logic host" that corresponds to the parameter "hostname" indicated by the input data of the component node N5. The property "logic host" represents the type of the object that outputs the output data provided to the node N5 as input data.

The third comparator 809 refers to the CMDB 120, and identifies the types of the objects indicated by the output data of the output candidate data D7 to D13. For example, the third comparator 809 identifies as the type of the object indicated by the output data of the output candidate data, the type of the configuration data in which the parameter value indicated by the output data of the output candidate data is set as the name of the object (e.g., host name, application name).

Here, the value of the parameter "STDOUT" indicated by the output data of the output candidate data D9, D10, and D11 is "HOST-A, HOST-B, HOST-C". Further, in the example depicted in FIG. 5, the type of the configuration data in which "HOST-A, HOST-B, HOST-C" is set as the host name of the object is "logic host".

In other words, the type of the object indicated by the output data of the output candidate data D9, D10, and D11 coincides with the property "logic host" corresponding to the parameter "hostname" indicated by the input data of the component node N5.

In this case, the setter 806, for example, sets a given value X (e.g., X=1) as the priority levels of the output data of the output candidate data D9, D10, and D11. The priority levels set for the output data of the output candidate data D9 to D11 are stored to the output data candidate list 1000.

FIG. 14 is diagram depicting a fifth example of the contents of the output data candidate list 1000. In FIG. 14, "1" is set in the priority level fields of the output candidate data D9 to D11.

Using the output data of the output candidate data D1 to D6 depicted in FIG. 12, an example of output data consolidation will be described. FIG. 15 is a diagram depicting an example of output data consolidation. In FIG. 15, among the output data of the output candidate data D1 to D6 depicted in FIG. 12, each output data for which the value of the parameter indicated by the output data coincides are consolidated.

For example, the value of the parameter indicated by the output data of the output candidate data D3, the value of the parameter indicated by the output data of the output candidate data D1, and the value of the parameter indicated by the output data of the output candidate data D2 coincide. Therefore, the output data of the output candidate data D1 and D2 are consolidated to the output data of the output candidate data D3, which has the greatest priority level among the output candidate data D1 to D3.

An example of branch route identification will be described in the case where the node N5 included in the automated administrative process 600, is selected as the component node under test.

In the automated administrative process 600, node N6, which is executed after the node N5, is a branch node. Therefore, the judger 812 judges that the node N6, which is executed after the component node under test, is a branch node. The judger 812, based on the branch conditions of the branch node, identifies the branch route for a case where the output data candidate of the component node under test is provided to the branch node.

In this example, the branch conditions defined for the node N6 in the automated administrative process 600 are as follows. "Default" represents values other than "RETCODE=0" and "RETCODE=161".
If RETCODE=0, Route-A
If RETCODE=161, Route-B
If Default, Route-C

The judger 812, based on the branch conditions of the branch node, identifies the branch route for a case where the output data candidate of the component node under test is provided to the branch node. The identified branch route, for example, is stored to a branch route list 1600 depicted in FIG. 16. Here, contents of the branch route list 1600 will be described taking an example where the output data of the output candidate data D3 to D6 depicted in FIG. 15 has been determined as output data candidates.

FIG. 16 is a diagram depicting an example of the contents of the branch route list 1600. In FIG. 16, for each output data candidate of the component node under test (node N5), a branch route in the case where the output data candidate is provided to the branch node (node N6) is depicted.

For example, the branch route (in the figure, BRANCH) "Route-B" is indicated for the case where the value "161" of the parameter "RETCODE that is indicated by the output data of the output candidate data D4, is provided to the node N6. In FIG. 16, the values of other parameters (STDOUT, STDERR) indicated by the output data of the output candidate data are also registered.

The branch route "Route-A" in the case where the value "0" of the parameter "RETCODE", which is indicated by the output data of the output candidate data D3, is provided to the node N6 is indicated. Further, the branch route "Route-C" for a case where the value "200" of the parameter "RETCODE", which is indicated by the output data of the output candidate data D5, is provided to the node N6 is indicated. The branch route "Route-C" for a case where the value "201" of the parameter "RETCODE", which is indicated by the output data of the output candidate data D6, is provided to the node N6 is indicated.

With reference to FIGs. 17 and 18, a selection screen that is for selecting the output data of a mock of the component node under test and that is displayed on the display 309 of the development terminal 202 will be described.

FIG. 17 is a diagram depicting an example of a selection screen. In FIG. 17, a selection screen 1700 is an example of a screen for selecting output data for the mock of the node N5 (service state confirmation) included in the automated administrative process 600. The selection screen 1700 is an example of a screen that is based on the output candidate data D3 to D6 in the output data candidate list 1000 depicted in FIG. 15.

In the selection screen 1700, the values of the parameters indicated by output data candidates 1701 to 1704 are depicted in descending order of priority level. Further, since the node N6, which is executed after the node N5, is a branch node, branch routes in cases where the values of the parameter "RETCODE" (indicated by the output data candidates 1701 to 1704) are provided to the node N6 are indicated.

Through the selection screen 1700, the user of the development terminal 202 can select output data for the mock of the node N5 (service state confirmation). For example, in descending order of priority level, the output data candidates 1701 to 1703 covering all of the branch routes can be selected as output data for the mock of the node N5 (service state confirmation).

FIG. 18 is diagram of another example of the selection screen. In FIG. 18, a selection screen 1800 is an example of a selection screen that is for selecting output data for the mock of the node N3 (arbitrary command) included in the automated administrative process 600. The selection screen 1800 is an example of a screen that is based on the output candidate data D7 to D13 in the output data candidate list 1000 depicted in FIG. 14.

In the selection screen 1800, the values of the parameters indicated by output data candidates 1801 to 1807 are depicted in descending order of priority level. Since the node N4, which is executed after the node N3, is a branch node, branch routes in cases where the values of the parameter "RETCODE" (indicated by the output data candidates 1801 to 1807) are provided to the node N4 are indicated.

Through the selection screen 1800, the user of the development terminal 202 can select output data for the mock of the node N3 (arbitrary command). Thus, by a presentation of output data candidates that have a high potential of being output from the object of the component node under test and a branch route for each output data candidate, the user can easily select output data for implementing tests through all branch routes.

Various procedures of the management server 201 according to the second embodiment will be described. Here, property identification processing for identifying the property of input data of an operator component will be described. The property identification processing described hereinafter is executed, for example, once a day.

FIG. 19 is a flowchart depicting an example of property identification processing by the management server 201 according to the second embodiment. In the flowchart depicted in FIG. 19, the management server 201 selects an operator component included in the automated administrative process used in the system (step S1901).

The management server 201 selects a parameter from among the parameters indicated by the input data of the selected operator component (step S1902). The management server 201 extracts from the execution history DB 110, the value of the selected parameter (step S1903).

The management server 201 searches the CMDB 120 for configuration items whose parameter value coincides with the extracted parameter value (step S1904). The management server 201 judges whether a configuration item has been retrieved from the CMDB 120 (step S1905).

If a configuration item has been retrieved (step S1905: YES), the management server 201 identifies the type of the configuration item as the property of the parameter indicated by the input data (step S1906). The management server 201 associates and registers to the property table 700, the name of the selected operator component, the name of the selected parameter, and the property of the identified parameter (step S1907).

The management server 201 judges whether among the parameters indicated by the input data of the operator component, a parameter remains unselected (step S1908). If a parameter that has not been selected is present (step S1908: YES), management server 201 returns to the step S1902.

If such a parameter is not present (step S1908: NO), the management server 201 judges whether an operator component included in the automated administrative process remains unselected (step S1909).

If an operator component that has not been selected is present (step S1909: YES), the management server 201 returns to step S1901. If such an operator component is not present (step S1909: NO), the process according to the flowchart ends.

At step S1905, if no configuration item is retrieved (step S1905: NO), the management server 201 executes property extrapolation processing of extrapolating the property of the selected parameter (step S1910), and transitions to step S1907.

At step S1901, the automated administrative process under test is, for example, all automated administrative processes registered in a runbook automation (RBA) system for automating operation procedures performed daily at a data center.

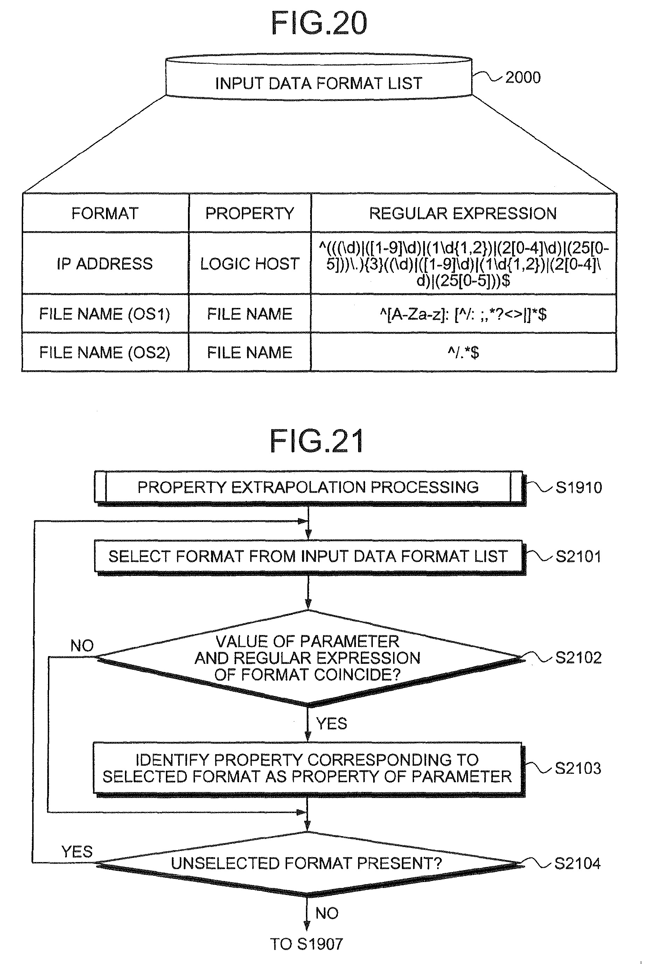

With reference to FIG. 20, an input data format list 2000 used in the property extrapolation processing at step S1910 will be described.

FIG. 20 is a diagram depicting an example of the input data format list 2000. In FIG. 20, the input data format list 2000 indicates for each format of the parameters indicated by the input data of the operator component, a property and a regular expression. A regular expression is a regular expression of the value of the parameter of the same property.

The property extrapolation processing at step S1910 depicted in FIG. 19 will be described in detail.

FIG. 21 is a flowchart depicting an example of the property extrapolation processing. In the flowchart depicted in FIG. 21, the management server 201 selects a format from among the input data format list 2000 depicted in FIG. 20 (step S2101).

The management server 201 judges whether the value of the parameter extracted at step S1903 depicted in FIG. 19 and the regular expression of the selected format coincide (step S2102). If the value of the parameter and the regular expression do not coincide (step S2102: NO), the management server 201 transitions to step S2104.

On the other hand, if the value of the parameter and the regular expression coincide (step S2102: YES), the management server 201 refers to the input data format list 2000 and identifies as the property of the parameter, the property corresponding to the selected format (step S2103).

The management server 201 judges whether a format that has not been selected is present in the input data format list 2000 (step S2104). If such a format is present (step S2104: YES), the management server 201 returns to step S2101. On the other hand, if such a format is not present (step S2104: NO), the management server 201 transitions to step S1907 depicted in FIG. 19.

At step S1906 depicted in FIG. 19 or at step S2103 depicted in FIG. 21, if multiple properties of the parameter are identified, the property of which the count is greatest among the identified properties may be used.

Thus, the property of each parameter indicated by the input data of the operator component can be identified.

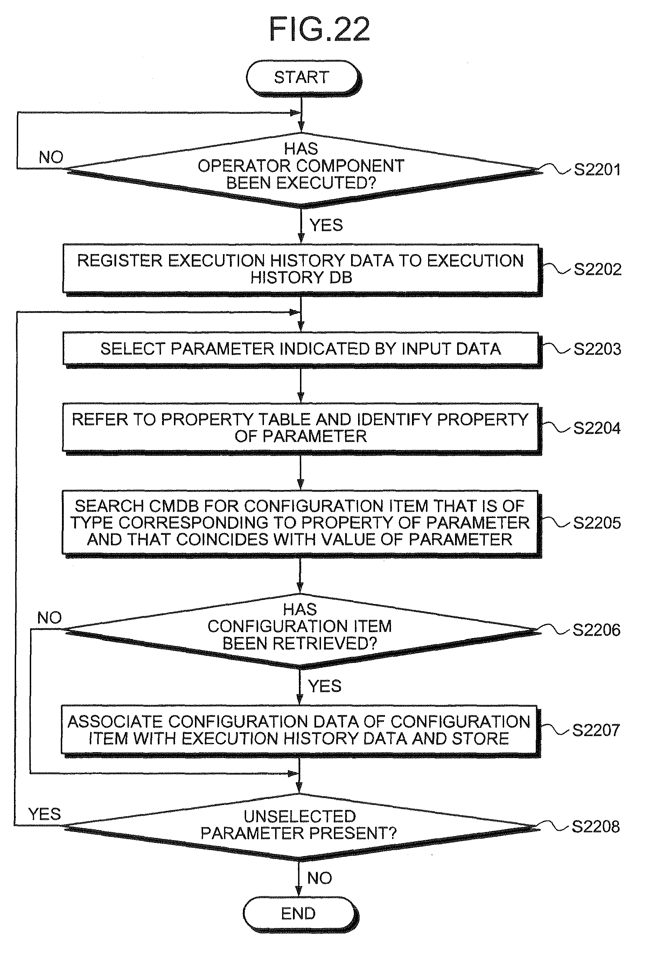

Execution history collection processing for collecting execution history data of an operator component of the management server will be described. FIG. 22 is a flowchart depicting an example of the execution history collection processing of the management server 201 according to the second embodiment.

In the flowchart depicted in FIG. 22, the collector 801 judges whether an operator component of a system under operations management has been executed (step S2201). The collector 801 awaits execution of an operator component (step S2201: NO).

When an operator component has been executed (step S2201: YES), the collector 801 registers to the execution history DB 110, execution history data that includes the input data and the output data of the executed operator component (step S2202).

The collector 801 selects a parameter indicated by the input data of the operator component (step S2203). The collector 801 refers to the property table 700 and identifies the property of the selected parameter (step S2204).

The collector 801 searches the CMDB 120 for a configuration item that is of the type corresponding to the identified property of the parameter and that coincides with the value of the parameter (step S2205). The collector 801 judges whether a configuration item has been retrieved from the CMDB 120 (step S2206).

If a configuration item has not been retrieved (step S2206: NO), the collector 801 transitions to step S2208. On the other hand, if a configuration item has been retrieved (step S2206: YES), the collector 801 associates and stores to the execution history DB 110, the configuration data of the retrieved configuration item and the execution history data registered at step S2202 (step S2207).

The collector 801 judges whether a parameter that is indicated by the input data of the operator component remains unselected (step S2208). If a parameter that has not been selected is present (step S2208: YES), the collector 801 returns to step S2203. On the other hand, if such a parameter is not present (step S2208: NO), the flow according to the flowchart ends.

Thus, execution history data that includes the input data and the output data of an operator component that has been executed in a system under operations management can be collected. Further, configuration data identifying the state of a configuration item that is the object subject to execution when the operator component is executed can be associated with execution history data and stored.

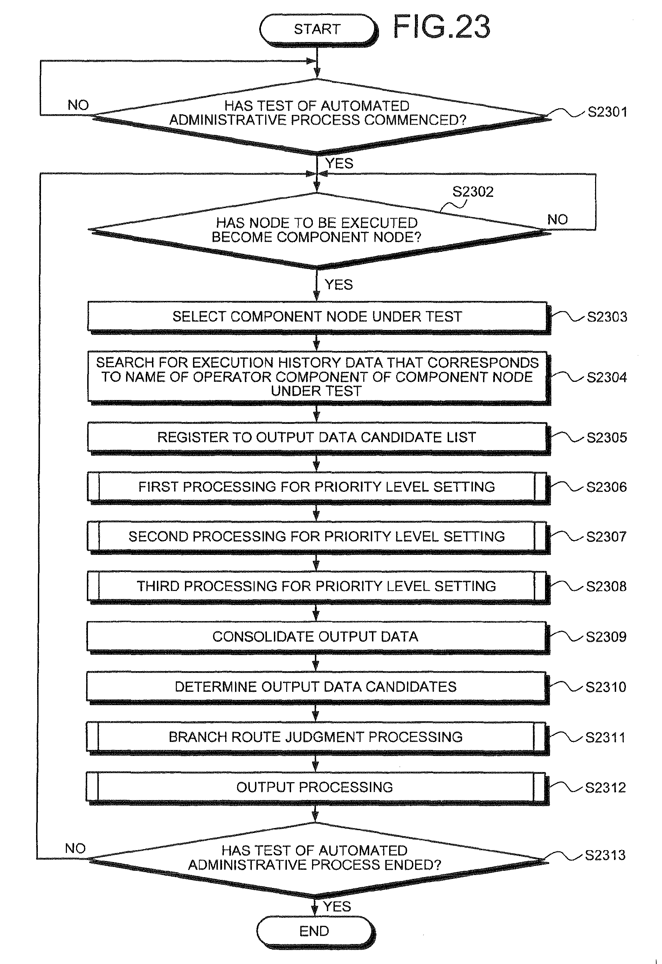

Test support processing that supports the testing of the automated administrative process TP of the management server 201 will be described. FIG. 23 is a flowchart depicting an example of the test support processing of the management server 201 according to the second embodiment.

In the flowchart depicted in FIG. 23, the selector 803 judges whether a test of the automated administrative process TP has commenced (step S2301). The selector 803 awaits commencement of the test of the automated administrative process TP (step S2301: NO).

When the test of the automated administrative process TP commences (step S2301: YES), the selector 803 judges whether among the nodes N1 to Nn included in the automated administrative process TP, a node that is to be executed has become a component node (step S2302).

The selector 803 waits for the node that is to be executed to become a component node (step S2302: NO). When the node that is to be executed becomes a component node (step S2302: YES), the selector 803 selects the component node, which is to be executed (hereinafter, "component node under test") (step S2303).

The searcher 804 searches the execution history DB 110 for execution history data that corresponds to the name of the operator component of the selected component node under test (step S2304). The searcher 804 registers the retrieved execution history data to the output data candidate list 1000 (step S2305).

The setter 806 executes first processing for priority level setting based on comparison results obtained by the first comparator 805 (step S2306). The setter 806 executes second processing for priority level setting based on comparison results obtained by the second comparator 807 (step S2307). The setter 806 executes third processing for priority level setting based on comparison results obtained by the third comparator 809 (step S2308).

The consolidator 810 consolidates the output data for each output candidate data, based on the value of the parameters indicated by the output data of each output candidate data (step S2309). The determiner 811, from among the consolidated output data, determines output data candidates for a case where the component node under test is executed (step S2310).

The judger 812 executes branch route judgment processing (step S2311). The output unit 813 executes output processing of displaying a selection screen for selecting output data for the mock of the component node under test (step S2312). The selector 803 judges whether the test of the automated administrative process TP has ended (step S2313).

If the test of the automated administrative process TP has not ended (step S2313: NO), the flow returns to step S2302. On the other hand, if the test of the automated administrative process TP has ended (step S2313: YES), the flow according to the flowchart ends.

Thus, output data candidates that have a high potential of being output from the object of the component node under test can be presented to the user and the work of setting output data for the mock of the operator component during the test of the automated administrative process TP can be supported.

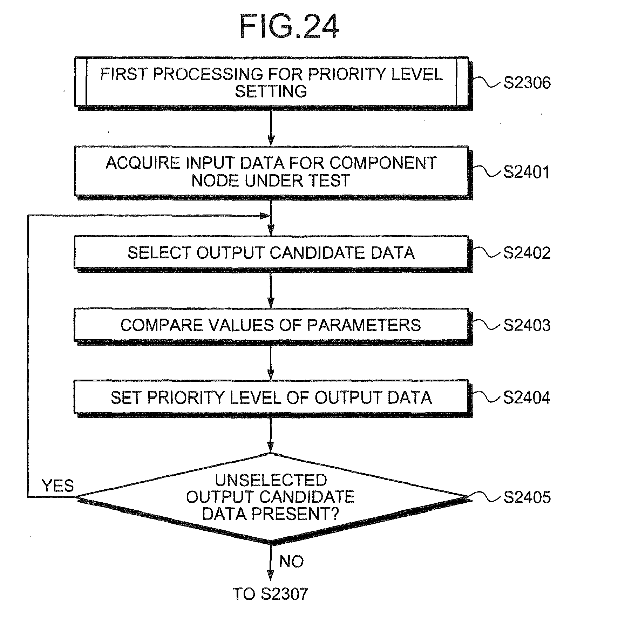

A procedure of the first processing for priority level setting at step S2306 depicted in FIG. 23 will be described. FIG. 24 is a flowchart depicting an example of the procedure of the first processing for priority level setting.

In the flowchart depicted in FIG. 24, the first comparator 805 acquires from the automated administrative process TP, the input data input to the mock of the component node under test (step S2401). The first comparator 805 selects output candidate data from the output data candidate list 1000 (step S2402).

The first comparator 805 compares the value of the parameter indicated by the acquired input data of the component node under test and the value of the parameter indicated by the input data of the selected output candidate data (step S2403). The setter 806 sets the priority level of the output data of the output candidate data, based on the comparison result (step S2404).

The first comparator 805 judges whether output candidate data that has not been selected remains among the output data candidate list 1000 (step S2405). If output candidate data that has not been selected is present (step S2405: YES), the flow returns to step S2402. On the other hand, if such output candidate data is not present (step S2405: NO), the flow transitions to step S2307 depicted in FIG. 23.

Thus, the priority level of each output data can be set such that the priority level of output data output from an object identical to the object extrapolated from the input data of the component node under test is set relatively high.

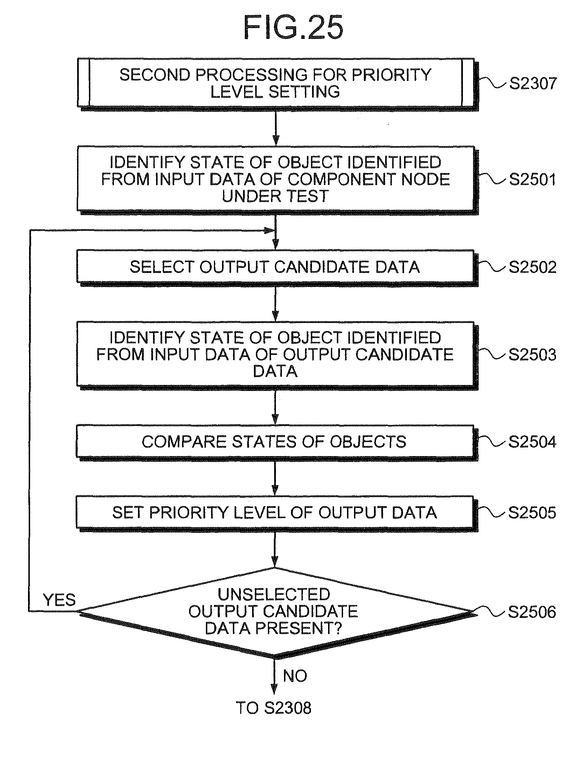

A procedure of the second processing for priority level setting at step S2307 depicted in FIG. 23 will be described. FIG. 25 is a flowchart depicting an example of the procedure of the second processing for priority level setting.

In the flowchart depicted in FIG. 25, the second comparator 807 identifies the state of the object identified from the input data of the component node under test (the state being during execution of the component node under test) (step S2501). The second comparator 807 selects output candidate data from the output data candidate list 1000 (step S2502).

The second comparator 807 identifies the state of the object identified from the input data of the output candidate data (the state being during the execution of the component node) (step S2503). The second comparator 807 compares the state of the object identified from the input data of the component node under test and the state of the object identified from the input data of the output candidate data (step S2504).

The setter 806 sets the priority level of the output data of output candidate data, based on the comparison result (step S2505). The second comparator 807 judges whether among the output data candidate list 1000, output candidate data that has not been selected remains (step S2506).

If output candidate data that has not been selected is present (step S2506: YES), the flow returns to step S2502. On the other hand, if such output candidate data is not present (step S2506: NO), the flow transitions to step S2308 depicted in FIG. 23.

Thus, among objects identical to the object extrapolated from the input data of the component node under test, the priority level of output data output from the objects having a state identical to that of the object extrapolated from the input data of the component node under test can be set relatively high.

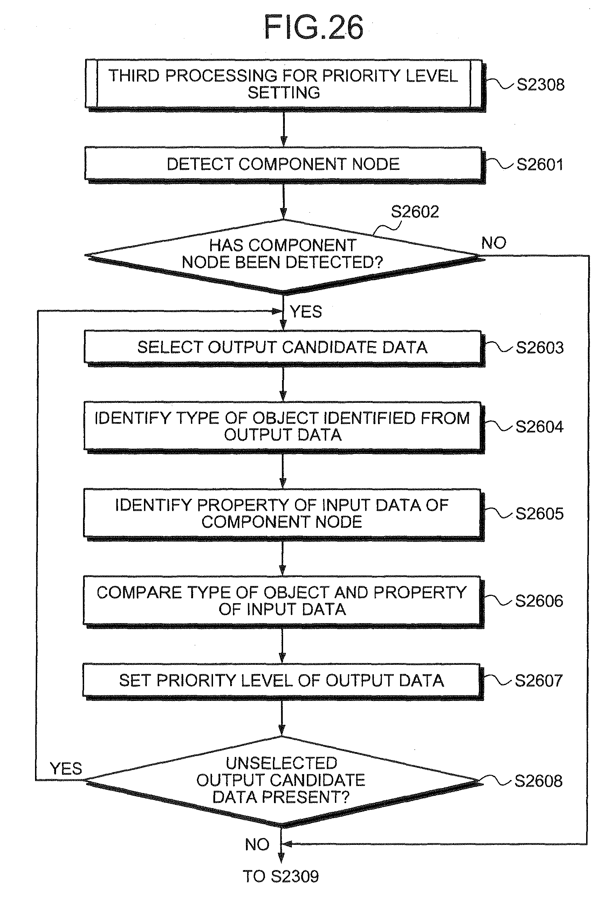

A procedure of the third processing for priority level setting at step S2308 depicted in FIG. 23 will be described. FIG. 26 is a flowchart depicting an example of the procedure of the third processing for priority level setting.

In the flowchart depicted in FIG. 26, the detector 808, from among a group of nodes that are among the node N1 to Nn included in the automated administrative process TP and subsequent to the component node under test, detects a component node to which the output data of the component node under test is provided as input data (step S2601). The third comparator 809 judges whether a component node has been detected (step S2602).

If a component node has not been detected (step S2602: NO), the flow transitions to step S2309 depicted in FIG. 23. On the other hand, if a component node has been detected (step S2602: YES), the third comparator 809 selects output candidate data from the output data candidate list 1000 (step S2603).

The third comparator 809 refers to the CMDB 120 and identifies the type of the object that is identified from the output data of the selected output candidate data (step S2604). The third comparator 809 refers to the property table 700 and identifies the property of the input data of the detected component node (step S2605).

The third comparator 809 compares the type of the object and the property of the input data (step S2606). The setter 806 sets the priority level of the output data of the output candidate data, based on the comparison result (step S2607). The third comparator 809 judges whether among the output data candidate list 1000, output candidate data that has not been selected remains (step S2608).

If output candidate data that has not been selected is present (step S2608: YES), the flow returns to step S2603. On the other hand, if such output candidate data is not present (step S2608: NO), the flow transitions to step S2309 depicted in FIG. 23.

Thus, the priority level of the output data output from an object of the same type as the object extrapolated from the input data of the subsequent component node to which the output data of the component node under test is provided as input data, can be set relatively high.

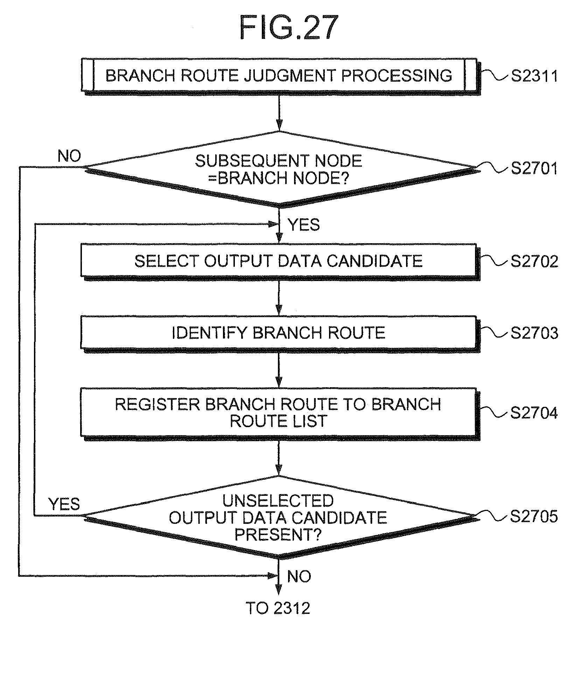

A procedure of the branch route judgment processing at step S2311 depicted in FIG. 23 will be described. FIG. 27 is a flowchart depicting an example the procedure of the branch route judgment processing.

In the flowchart depicted in FIG. 27, the judger 812 judges whether the node that is executed after the component node under test and among the nodes N1 to Nn included in the automated administrative process TP, is a branch node (step S2701). If the node is not a branch node (step S2701: NO), the flow transitions to step S2312 depicted in FIG. 23.

On the other hand if the node is a branch node (step S2701: YES), the judger 812 selects an output data candidate from among the output data candidates determined at step S2310 depicted in FIG. 23 (step S2702). The judger 812, based on the branch conditions of the branch node, identifies the branch route for a case where the output data candidate for the component node under test is provided to the branch node (step S2703).

The judger 812 registers the identified branch route to the branch route list 1600 (step S2704). The judger 812 judges whether among the determined output data candidates, an output data candidate that has not been selected remains (step S2705).

If an output data candidate that has not been selected is present (step S2705: YES), the flow returns to step S2702. On the other hand, if such an output data candidate is not present (step S2705: NO), the flow transitions to step S2312 depicted in FIG. 23.

Thus, the branch route for a case where the output data of the component node under test is provided to the branch node, which is executed next after the component node under test, can be identified.

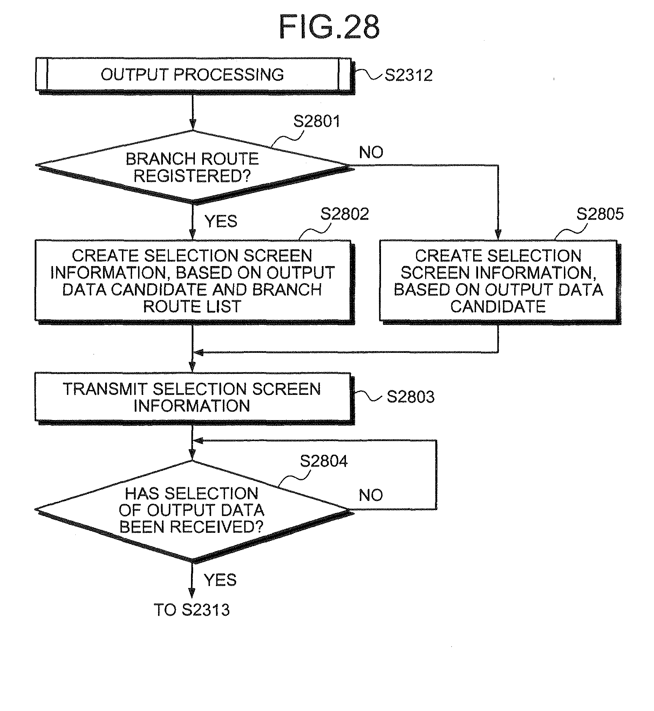

A procedure of the output processing at step S2312 depicted in FIG. 23 will be described. FIG. 28 is a flowchart depicting an example of the procedure of the output processing. In the flowchart depicted in FIG. 28, the management server 201 judges whether a branch route is registered in the branch route list 1600 (step S2801).

If a branch route is registered (step S2801: YES), the management server 201 creates selection screen information, based on the output data candidate of the component node under test and the contents of the branch route list 1600 (step S2802). The selection screen information is information for displaying a selection screen for selecting output data for the mock of the component node under test.

The output unit 813 transmits the created selection screen information to the development terminal 202 (step S2803). The management server 201 judges whether a selection of output data for the mock of the component node under test has been received by a user input via the keyboard 310 and/or the mouse 311 of the development terminal 202 (step S2804).

The receipt of a selection of output data is awaited (step S2804: NO), and when a selection of output data is received (step S2804: YES), the flow transitions to step S2313 depicted in FIG. 23.

At step S2801, if no branch route is registered (step S2801: NO), the management server 201 creates selection screen information, based on the output data candidate of the component node under test (step S2805), and transitions to step S2803.

Thus, a selection screen for selecting output data for the mock of the component node under test can be presented to the user of the development terminal 202.

As described, the management server 201 according to the second embodiment enables execution history data that corresponds to the operator component name of the component node under test to be retrieved from the execution history DB 110. Consequently, the output data can be narrowed down to the output data that is output from an object of an operator component that has the same name as the component node under test.

The management server 201 enables output data candidates to be determined for a case where the component node under test is executed, the output data candidates being determined from among the output data O1 to Om and based on results of comparison of the object identified from the input data of the component node under test and the objects identified from each input data Ij. Thus, output data output from an object that is identical to the object extrapolated from the input data of the component node under test can be determined as an output data candidate.

The management server 201 enables determination of output data candidates for the component node under test, from among the output data O1 to Om and based on the results of comparison the state of the object identified from the input data of the component node under test and the states of the objects identified from each input data Ij. Thus, among objects that are identical to the object extrapolated from the input data of the component node under test, output data output from an object of the same state as the extrapolated object can be determined as an output data candidate.

The management server 201 enables a branch route to be identified for each determined output data candidate when the node executed after the component node under test is a branch node. Thus, the output data candidates for the component node under test and a branch route for each output data candidate that is a branch node can be presented to the user.

According to the management server 201, a component node to which the output data of the component node under test is provided as input data can be detected from among a group of nodes subsequent to the component node under test. Thus, based on a result of comparison of the type of the object identified from the output data Oj and the type of the object identified from the input data of the detected component node, an output data candidate can be determined from among the output data O1 to Om.

Consequently, output data output from an object of the same type as the object extrapolated from the input data of the subsequent component node to which the output data of the component node under test is provided as input data can be determined as an output data candidate. In other words, output data for the component node under test can be extrapolated from the property of the input data of the component node subsequent to the component node under test.

Thus, the test support program, the test support method, and the test support apparatus enable output data candidates having a high potential of being output from the object of the component node under test to be presented to the user. Further, when the node executed after the component node under test is a branch node, branch routes for each output data candidate that is a branch node can be presented to the user.

Consequently, the burden of setting output data for the mock of the component node under test can be reduced and efficiency of testing the automated administrative process can be facilitated. For example, the burden of checking of operator component specifications for inputting output data for the mock of an operator component, operating the operator component, etc. can be saved. Even when users independently develop operator components, for example, output data patterns need not be prepared in advance as products.

Since output data candidates for the component node under test are determined from among past output data actually output during actual operation, testing of the automated administrative process TP can be performed using information that is closer to actual data, enabling the accuracy of the test to be improved. By presenting branch routes for each output data candidate, the user can easily select output data for implementing tests through all of the branch routes, enabling the accuracy of the test to be improved.

The test support method described in the present embodiment may be implemented by executing a prepared program on a computer such as a personal computer and a workstation. The program is stored on a computer-readable recording medium such as a hard disk, a flexible disk, a CD-ROM, an MO, and a DVD, read out from the computer-readable medium, and executed by the computer. The program may be distributed through a network such as the Internet.

All examples and conditional language provided herein are intended for pedagogical purposes of aiding the reader in understanding the invention and the concepts contributed by the inventor to further the art, and are not to be construed as limitations to such specifically recited examples and conditions, nor does the organization of such examples in the specification relate to a showing of the superiority and inferiority of the invention. Although one or more embodiments of the present invention have been described in detail, it should be understood that the various changes, substitutions, and alterations could be made hereto without departing from the spirit and scope of the invention.

## Claims

1. A test support program that causes a computer, which supports testing of a series of tasks related to system administration of a system, to execute a process, the process comprising:
acquiring input data concerning a given task that is among the series of tasks and operates a given device included in the system;
retrieving execution history data concerning the given task, from a storage device that associates and stores therein execution history data including input data and output data of each task that has been executed in the system, and identification information of the tasks; and
outputting among the retrieved execution history data, the output data included in the execution history data that includes the acquired input data of the given task.

2. The test support program according to claim 1, the process further comprising
determining from among the output data of each retrieved execution history data and based on a result of comparison of the given device identified from the input data of the given task and each device included in the system and identified from the input data of each retrieved execution history data, an output data candidate for a case where the given task is executed, wherein
the outputting includes outputting the determined output data candidate.

3. The test support program according to claim 2, wherein
the determining includes determining the output data candidate from among the output data of each retrieved execution history data and based on a result of comparison of the state of the given device during execution of the given task and the state of each device during execution of the task operating the device, each device being identified from the input data of the retrieved execution history data.

4. The test support program according to claim 3, wherein
the execution history data is associated with state information that indicates the state of each device during execution of the task operating the device, each device being identified from the input data of the retrieved execution history data,
the process further comprises
identifying the state of the given device during execution of the given task, by referring to a database storing therein the state information, and
the determining includes determining the output data candidate from among the output data of each retrieved execution history data and based on a result of comparison of the identified state of the given device and the state of each device, indicated by the state information.

5. The test support program according to any one of claims 2 to 4, the process further comprising:
judging whether a subsequent task executed next after the given task and among the series of tasks is a conditional branch; and
identifying based on a branch condition of the subsequent task and when the subsequent task is judged to be a conditional branch, a branch path for a case where the determined output data candidate is provided to the subsequent task as input data, wherein
the outputting includes outputting the determined output data candidate and the identified branch path.

6. The test support program according to any one of claims 2 to 5, the process further comprising
detecting from among a group of subsequent tasks that are executed after the given task and are among the series of tasks, a task that operates a device in the system and is provided the output data of the given task as input data, wherein
the determining includes determining the output data candidate from among the output data of each retrieved execution history data and based on a result of comparison of the type of the device identified from the input data of the detected task and the type of each device included in the system and identified from the output data of the retrieved execution history data.

7. The test support program according to any one of claims 1 to 6, the process further comprising
consolidating among the output data of the retrieved execution history data, a first output data and a second output data, when the value of a variable indicated by the first output data and the value of a variable indicated by the second output data are identical.

8. A test support program that causes a computer, which supports testing of a series of tasks related to system administration of a system, to execute a process, the process comprising:
retrieving execution history data concerning a given task that is among the series of tasks and operates a given device included in the system, the execution history data being retrieved from a storage device that associates and stores therein execution history data including input data and output data of each task that has been executed in the system, and identification information of the task;
detecting from among a group of subsequent tasks that are executed after the given task and are among the series of tasks, a task that operates a device in the system and is provided the output data of the given task as input data;
determining from among the output data of each retrieved execution history data and based on a comparison result of the type of the device identified from the input data of the detected task and the type of each device included in the system and identified from the output data of the retrieved execution history data, an output data candidate for a case where the given task is executed; and
outputting the determined output data candidate.

9. A test support program that causes a computer, which supports testing of a series of tasks related to system administration of a system, to execute a process, the process comprising:
retrieving execution history data concerning a given task that is among the series of tasks and operates a given device included in the system, the execution history data being retrieved from a storage device that associates and stores therein execution history data including input data and output data of each task that has been executed in the system, and identification information of the task;
judging whether a subsequent task executed next after the given task and among the series of tasks is a conditional branch;
identifying based on a branch condition of the subsequent task and when the subsequent task is judged to be a conditional branch, branch paths for cases where the output data of each retrieved execution history data are provided to the subsequent task as input data; and
outputting the identified branch paths.

10. A test support method executed by a computer that supports testing of a series of tasks related to system administration of a system, the test support method comprising:
acquiring input data concerning a given task that is among the series of tasks and operates a given device included in the system;
retrieving execution history data concerning the given task, from a storage device that associates and stores therein execution history data including input data and output data of each task that has been executed in the system, and identification information of the tasks; and
outputting among the retrieved execution history data, the output data included in the execution history data that includes the acquired input data of the given task.

11. A test support apparatus (101) that supports testing of a series of tasks related to system administration of a system, the test support apparatus (101) comprising:
an acquirer (802) that acquires input data concerning a given task that is among the series of tasks and operates a given device included in the system;
a searcher (804) that retrieves execution history data concerning the given task, from a storage device that associates and stores therein execution history data including input data and output data of each task that has been executed in the system, and identification information of the tasks; and
an output device (813, 309) that among the retrieved execution history data, outputs the output data included in the execution history data that includes the acquired input data of the given task.
